# EUROPÄISCHE PATENTSCHRIFT

(11) **EP 4 077 515 B1**
(45) Veröffentlichungstag und Bekanntmachung des Hinweises auf die Patenterteilung: **27.09.2023**
(21) Anmeldenummer: 20820408.1
(22) Anmeldetag: 09.12.2020
(51) Int. Cl.: C08K 3/013, C08L 69/00, C08J 3/22

(54) **VERFAHREN ZUR HERSTELLUNG EINES MASTERBATCHES UND EINER FORMMASSE MIT VERBESSERTEN EIGENSCHAFTEN**
METHOD FOR THE PREPARATION OF A MASTER BATCH AND A MOULDING COMPOSITION WITH ENHANCED PROPERTIES
PROCÉDÉ DE FABRICATION D'UN LOT MAÎTRE ET D'UNE MATIÈRE DE MOULAGE AUX PROPRIÉTÉS AMÉLIORÉES

(30) Priorität: 16.12.2019 EP 19216537
(43) Veröffentlichungstag der Anmeldung: 26.10.2022
(73) Patentinhaber: Covestro Intellectual Property GmbH & Co. KG, 51373 Leverkusen (DE)
(72) Erfinder: ERKELENZ, Michael, 47239 Duisburg (DE); RUDOLF, Reiner, 40764 Langenfeld (DE); THIEM, Hans-Jürgen, 41539 Dormagen (DE)
(74) Vertreter: Levpat
(86) Internationale Anmeldenummer: PCT/EP2020/085161
(87) Internationale Veröffentlichungsnummer: WO 2021/122183

(56) Entgegenhaltungen:
- US-A1- 2014 357 769
- US-A1- 2015 353 732

## Beschreibung

Gegenstand der vorliegenden Erfindung ist ein Verfahren zur Herstellung eines Masterbatches mit verbesserten Eigenschaften. Insbesondere Gegenstand der vorliegenden Erfindung ist die Herstellung eines Masterbatches enthaltend ein Polycarbonat und mindestens einen Verstärkungsfüllstoff, bevorzugt ausgewählt aus der Gruppe umfassend Titandioxid (TiOz), Talkum (Mg₃Si₄O₁₀(OH)₂), Dolomit CaMg[CO₃]₂, Kaolinit Al₄[(OH)₈|Si₄O₁₀] und Wollastonit Ca₃[Si₃O₉], besonders bevorzugt ausgewählt aus der Gruppe umfassend Titandioxid (TiOz) und Talkum (Mg₃Si₄O₁₀(OH)₂). Dabei beträgt der Gesamtgehalt an Verstärkungsfüllstoff im Masterbatch 30 bis 70 Gew.-%, bevorzugt 35 bis 65 Gew.-%, besonders bevorzugt 40 bis 60 Gew.-%, jeweils bezogen auf die Gesamtmasse des Masterbatches.

Auch Gegenstand der vorliegenden Erfindung ist die Herstellung einer Formmasse mit verbesserten Eigenschaften. Insbesondere auch Gegenstand der vorliegenden Erfindung ist die Herstellung einer Formmasse enthaltend ein Polycarbonat und mindestens einen Verstärkungsfüllstoff, bevorzugt ausgewählt aus der Gruppe umfassend Titandioxid (TiOz), Talkum (Mg₃Si₄O₁₀(OH)₂), Dolomit CaMg[CO₃]₂, Kaolinit Al₄[(OH)₈|Si₄O₁₀] und Wollastonit Ca₃[Si₃O₉], besonders bevorzugt ausgewählt aus der Gruppe umfassend Titandioxid (TiO₂) und Talkum (Mg₃Si₄O₁₀(OH)₂). Dabei beträgt der Gesamtgehalt an Verstärkungsfüllstoff 0,5 bis 60 Gew.-%, bevorzugt 1,5 bis 50 Gew.-%, besonders bevorzugt 3 bis 40 Gew.-%, jeweils bezogen auf die Gesamtmasse der Formmasse. Dabei wird die Formmasse mit verbesserten Eigenschaften unter Verwendung mindestens eines erfindungsgemäß hergestellten Masterbatches hergestellt.

Vorzugsweise enthält ein erfindungsgemäß hergestellter Masterbatch nur einen Verstärkungsfüllstoff, also nur Titandioxid (TiOz), oder nur Talkum (Mg₃Si₄O₁₀(OH)₂) oder nur Dolomit CaMg[CO₃]₂ oder nur Kaolinit Al₄[(OH)₈|Si₄O₁₀] oder nur Wollastonit Ca₃[Si₃O₉], bevorzugt nur Titandioxid (TiO₂) oder nur Talkum (Mg₃Si₄Ow(OH)₂). Bezogen auf diesen einen Verstärkungsfüllstoff enthält der jeweils verwendete Masterbatch einen höheren Gehalt an Verstärkungsfüllstoff als die jeweils unter Verwendung dieses Masterbatches hergestellte Formmasse.

Der Gesamtgehalt an Verstärkungsfüllstoff in der Formmasse kann dennoch höher sein als der Gesamtgehalt an Verstärkungsfüllstoff im Masterbatch, insbesondere wenn der Masterbatch nur einen Verstärkungsfüllstoff enthält, da die Formmasse mehrere Verstärkungsfüllstoffe enthalten kann. Der Gesamtgehalt an Verstärkungsfüllstoff in der Formmasse kann durch Zugabe von verschiedenen Masterbatches enthaltend jeweils unterschiedliche Verstärkungsfüllstoffe und/oder durch zusätzliche Zugabe von Verstärkungsfüllstoffen erreicht werden, insbesondere durch zusätzliche Zugabe von Verstärkungsfüllstoffen erreicht werden.

Erfindungsgemäß ist der Masterbatch dadurch erhältlich, dass ein Polycarbonat, mindestens ein Verstärkungsfüllstoff und gegebenenfalls sonstige Masterbatch-Bestandteile mittels eines kontinuierlichen Einwellenkneters compoundiert werden. Insbesondere weist das erfindungsgemäße Verfahren folgende Schritte auf:
(1) Zugeben von Polycarbonat und von mindestens einem Verstärkungsfüllstoff in einen kontinuierlichen Einwellenkneter;
(2) Compoundieren des Polycarbonats und des mindestens einen Verstärkungsfüllstoffs mit einem kontinuierlichen Einwellenkneter.

Vorzugsweise wird in Schritt (1) nur ein Verstärkungsfüllstoff zugegeben. Sowohl in Schritt (1) als auch in Schritt (2) können auch sonstige Masterbatch-Bestandteile zugegeben und in Schritt (2) mit compoundiert werden. Schritt (1) und Schritt (2) können sowohl nacheinander als auch gleichzeitig ablaufen.

Dabei können Polycarbonat, Verstärkungsfüllstoff und gegebenenfalls sonstige Masterbatch-Bestandteilen gleichzeitig oder nacheinander in den kontinuierlichen Einwellenkneter gegeben werden. Insbesondere kann die Zugabe des mindestens einen Verstärkungsfüllstoffs entweder vor dem Aufschmelzen des Polycarbonats, nach dem Aufschmelzen des Polycarbonats oder sowohl vor als auch nach dem Aufschmelzen des Polycarbonats erfolgen.

Der Masterbatch kann außerdem sonstige Masterbatch-Bestandteile enthalten. Der Gehalt der sonstigen Masterbatch-Bestandteile im Masterbatch enthaltend ein Polycarbonat und mindestens einen Verstärkungsfüllstoff beträgt von 0 bis 5 Gew.-%, bevorzugt von 0 bis 4 Gew.-%, besonders bevorzugt 0 bis 3 Gew.-%, jeweils bezogen auf die Gesamtmasse der Formmasse. Entsprechend dem Gesamtgehalt des mindestens einen Verstärkungsfüllstoff und dem Gehalt der sonstigen Masterbatch-Bestandteile beträgt der Gehalt an Polycarbonat im erfindungsgemäßen Masterbatch 70 bis 25 Gew.-%, bevorzugt 65 bis 31 Gew.-%, besonders bevorzugt 59,5 bis 37 Gew.-%, jeweils bezogen auf die Gesamtmasse des Masterbatches. Dabei beträgt die Summe aller Bestandteile des Masterbatches 100 Gew.-%.

Diese sonstigen Masterbatch-Bestandteile sind beispielsweise andere für ein PolycarbonatMasterbatch übliche Füllstoffe, andere Thermoplaste, beispielsweise Acrylnitril-Butadien-Styrol-Copolymere, Styrol-Acrylnitril-Copolymere oder auch Polyester, oder andere Additive wie UV-Stabilisatoren, IR-Stabilisatoren, Thermostabilisatoren, Antistatika, Farbstoffe und Pigmente in den üblichen Mengen zugesetzt werden; gegebenenfalls können das Entformungsverhalten, das Fließverhalten, und/oder die Flammwidrigkeit noch durch Zusatz externer Entformungsmittel, Fließmittel, und/oder Flammschutzmittel verbessert werden (z. B. Alkyl- und Arylphosphite, - phosphate, -phosphane, niedermolekulare Carbonsäureester, Halogenverbindungen, Salze, Kreide, Quarzmehl, Glas- und Kohlenstofffasern, Pigmente und deren Kombination. Solche Verbindungen werden z. B. in WO 99/55772, S. 15-25, und in "Plastics Additives", R. Gächter und H. Müller, Hanser Publishers 1983, beschrieben). Bevorzugt als Stabilisator ist ein Carbonsäureanhydrid modifiziertes alpha-Olefin-Polymer, insbesondere ein Maleinsäureanhydrid modifiziertes alpha-Olefin-Polymer. Solche Carbonsäureanhydrid modifizierten alpha-Olefin-Polymere sind beispielsweise aus der WO2018037037A1 bekannt. Soweit es sich bei den sonstigen Masterbatch-Bestandteilen um einen oder mehrere Thermoplaste handelt, ist deren Gehalt im Masterbatch auf in der Summe maximal 3,0 Gew.-%, bevorzugt maximal 2,5 Gew.-%, besonders bevorzugt maximal 2,0 Gew.-% beschränkt. Ein höhere Anteil an Thermoplasten, die nicht ein Polycarbonat sind, schränkt die Verwendbarkeit des Masterbatches zu sehr ein.

Die vorgenannten Polyester sind von den weiter oben beschriebenen Polyestercarbonaten zu unterscheiden. Bei den Polyestern im Sinne der vorliegenden Erfindung handelt es sich insbesondere um solche, die in den Abschnitten [0131] bis [0138] der US 2014/357769 A1 beschrieben sind. Der Anteil an Polyester im Masterbatch beträgt maximal 0,9 Gew.-%, bevorzugt maximal 0,5 Gew.-%, besonders bevorzugt maximal 0,2 Gew.-%, insbesondere bevorzugt maximal 0,1 Gew.-%, ganz besonders bevorzugt von 0 bis 0,1 Gew.-%. Ganz insbesondere bevorzugt beträgt der Anteil an Polyester im Masterbatch 0 Gew.-%.

Aus dem Stand der Technik, beispielsweise aus [1] ([1] = Klemens Kohlgrüber: Der gleichläufige Doppelschneckenextruder, 2., neu bearbeitete und erweiterte Auflage, Hanser Verlag München 2016, S. 76ff*)* sind Masterbatches grundsätzlich bekannt.

Im Sinne der vorliegenden Erfindung wird unter einem Masterbatch ein Feststoffgemisch enthaltend mindestens ein Polymer und mindestens einen Verstärkungsfüllstoff verstanden, wobei ein Masterbatch als Granulat, Pulver oder in sonstiger Erscheinungsform vorliegen und zur Herstellung von Polymerformmassen verwendet werden kann.

Nachfolgend wird ein Masterbatch enthaltend ein Polycarbonat auch Polycarbonatmasterbatch genannt.

Aus dem Stand der Technik, beispielsweise aus [1] ([1] = Klemens Kohlgrüber: Der gleichläufige Doppelschneckenextruder, 2., neu bearbeitete und erweiterte Auflage, Hanser Verlag München 2016, S. 47ft*)* ist es auch bekannt, Polymerformmassen, wie beispielsweise auch eine Formmassen enthaltend ein Polycarbonat eine dieser Polymerformmassen ist, durch Beimischung von Zuschlagstoffen, beispielsweise Füllstoffe, so aufzubereiten, dass diese Polymerformmassen ein gewünschtes Eigenschaftsprofil erreichen. Diese Aufbereitung, auch Compoundierung genannt, wird in aller Regel in einem Doppelschneckenextruder durchgeführt. Dabei ist es insbesondere erwünscht, eine möglichst gute Dispergierung der Füllstoffe in der Polymerformmasse zu erreichen, das heißt, eine möglichst gute Zerkleinerung und Verteilung der Füllstoffe in der Polymerformmasse. Die Compoundierung ist umso schwieriger, je höher der Gesamtgehalt der zu dispergierenden Füllstoffe in der Polymerformmasse ist und je besser die Dispergierung, also je besser die Zerkleinerung und Verteilung, der Füllstoffe in der Polymerformmasse sein soll.

US2014/357769A1 offenbart gemischte thermoplastische Zusammensetzungen, die mindestens ein Polycarbonatpolymer, ein Polyesterpolymer und einen verstärkenden Füllstoff enthalten.

Nachfolgend wird eine Formmasse enthaltend ein Polycarbonat auch Polycarbonatformmasse genannt.

Erfindungsgemäß wird der mindestens eine Verstärkungsfüllstoff unter Verwendung des erfindungsgemäß hergestellten Masterbatches in die Polycarbonatformmasse eingebracht. Eine auf diese Weise hergestellte Polycarbonatformmasse enthält ein Polycarbonat und mindestens einen Verstärkungsfüllstoff. Dabei beträgt der Gesamtgehalt an Verstärkungsfüllstoff 0,5 bis 60 Gew.-%, bevorzugt 1,5 bis 50 Gew.-%, besonders bevorzugt 3 bis 40 Gew.-%, jeweils bezogen auf die Gesamtmasse der Formmasse.

Die Formmasse kann außerdem sonstige Formmassen-Bestandteile enthalten. Der Gehalt der sonstigen Formmassen-Bestandteile in der Formmasse enthaltend ein Polycarbonat und mindestens einen Verstärkungsfüllstoff beträgt von 0 bis 61 Gew.-%, bevorzugt von 0 bis 55 Gew.-%, besonders bevorzugt 0 bis 25 Gew.-%, jeweils bezogen auf die Gesamtmasse der Formmasse. Entsprechend dem Gesamtgehalt des mindestens einen Verstärkungsfüllstoff und dem Gehalt an sonstigen Formmassen-Bestandteilen beträgt der Gehalt an Polycarbonat in der erfindungsgemäßen Formmasse 99,5 bis 22,5 Gew.-%, bevorzugt 98,5 bis 25 Gew.-%, besonders bevorzugt 97 bis 35 Gew.-%, jeweils bezogen auf die Gesamtmasse der Formmasse. Dabei beträgt die Summe aller Bestandteile der Formmasse 100 Gew.-%. So kann beispielsweise - und ohne dass die vorliegende Erfindung darauf beschränkt wäre - eine erfindungsgemäße Polycarbonatformmasse, die 60 Gew.-% Verstärkungsfüllstoff enthält, zusätzlich 37 Gew.-% Polycarbonat und 3 Gew.-% sonstige Formmassen-Bestandteile enthalten, oder eine erfindungsgemäße Polycarbonatformmasse, die 60 Gew.-% Verstärkungsfüllstoff enthält, kann zusätzlich 20 Gew.-% Polycarbonat und 20 Gew.-% sonstige Formmassen-Bestandteile enthalten.

Auch kann beispielsweise - und ohne dass die vorliegende Erfindung darauf beschränkt wäre - eine erfindungsgemäße Polycarbonatformmasse, die 50 Gew.-% Verstärkungsfüllstoff enthält, zusätzlich 47 Gew.-% Polycarbonat und 3 Gew.-% sonstige Formmassen-Bestandteile enthalten, oder eine erfindungsgemäße Polycarbonatformmasse, die 50 Gew.-% Verstärkungsfüllstoff enthält, kann zusätzlich 20 Gew.-% Polycarbonat und 30 Gew.-% sonstige Formmassen-Bestandteile enthalten.

Auch kann beispielsweise - und ohne dass die vorliegende Erfindung darauf beschränkt wäre - eine erfindungsgemäße Polycarbonatformmasse, die 40 Gew.-% Verstärkungsfüllstoff enthält, zusätzlich 57 Gew.-% Polycarbonat und 3 Gew.-% sonstige Formmassen-Bestandteile enthalten, oder eine erfindungsgemäße Polycarbonatformmasse, die 40 Gew.-% Verstärkungsfüllstoff enthält, kann zusätzlich 30 Gew.-% Polycarbonat und 30 Gew.-% sonstige Formmassen-Bestandteile enthalten.

Erfindungsgemäß ist diese Formmasse dadurch erhältlich, dass der in den Schritten (1) und (2) erhaltene Polycarbonatmasterbatch wie folgt weiterverarbeitet wird:
(3) Zugeben des in Schritt (2) erhaltenen Polycarbonatmasterbatches und von Polycarbonat, in ein Compoundieraggregat;
(4) Compoundieren des in Schritt (2) erhaltenen Polycarbonatmasterbatches und des Polycarbonats mit dem Compoundieraggregat.

Schritt (3) und Schritt (4) können sowohl nacheinander als auch gleichzeitig ablaufen.

Dabei kann in Schritt (3) gegebenenfalls zusätzlicher Verstärkungsfüllstoff zugegeben und in Schritt (4) mit compoundiert werden. Dieser zusätzliche Verstärkungsfüllstoff kann der gleiche sein, der auch im Masterbatch enthalten ist, oder es kann ein anderer Verstärkungsfüllstoff sein, als der im Masterbatch enthaltene sein. Vorzugsweise ist der zusätzlich in Schritt (3) zugegebene Verstärkungsfüllstoff ein anderer als der, der im Masterbatch enthalten ist.

Auch können in Schritt (3) gegebenenfalls sonstige Formmassen-Bestandteile zugegeben und in Schritt (4) mit compoundiert werden.

Das Compoundieraggregat ist dabei vorzugsweise ausgewählt aus der Gruppe umfassend die Mitglieder kontinuierlicher Einwellenkneter, Mehrwellenextruder, insbesondere Doppelschneckenextruder oder Ringextruder, Planetwalzenextruder, Stempelkneter und Innenmischer. Besonders bevorzugt ist das Compoundieraggregat ein Doppelschneckenextruder oder ein Ringextruder oder ein Planetwalzenextruder, ganz besonders bevorzugt ein gleichläufiger Doppelschneckenextruder.

Eine verbesserte Dispergierung von Füllstoffen, insbesondere Verstärkungsfüllstoffen, in einer Polymerformmasse bewirkt unter anderem auch, dass die Formmasse verbesserte Eigenschaften, insbesondere verbesserte Oberflächeneigenschaften und verbesserte mechanische Eigenschaften wie z.B. eine höhere Zähigkeit, eine höhere Kraftaufnahme und größere Dehnung beim Durchstoßversuch, aufweist.

Um beispielsweise bei einem gegebenen Doppelschneckenextruder eine verbesserte Dispergierung bei einem möglichst hohen Gesamtgehalt an Füllstoffen, insbesondere Verstärkungsfüllstoffen, zu erreichen, muss der Energieeintrag in die Polymerformmasse erhöht werden. Dies hat aber zur Folge, dass die Temperatur der Polymerformmasse während der Compoundierung im Doppelschneckenextruder ansteigt und zwar umso stärker, je höher der Energieeintrag ist. Dies wiederum hat zur Folge, dass die Polymerformmasse thermische Schäden erleiden kann. Diese können wiederum zu einer Vergilbung der Polymerformmasse, zur Entstehung von Stippen, oder anderen unerwünschten Veränderungen der Polymerformmasse führen.

Da diese thermischen Schäden in der Regel vermieden werden sollen, wird auf die verbesserte Dispergierung verzichtet oder der Gesamtgehalt an Füllstoffen, insbesondere Verstärkungsfüllstoffen, nicht erhöht oder beides. In seltenen Fällen wird aber auch die thermische Schädigung oder eine schlechtere Dispergierung in Kauf genommen oder beides. Auf diese Weisen kann jedoch keine Polymerformmasse erhalten werden, die verbesserte Eigenschaften aufweist. Insbesondere ist es auf diese Weise nicht möglich, gleichzeitig die Oberflächeneigenschaften und die mechanischen Eigenschaften der Polymerformmasse zu verbessern.

Auch hat sich herausgestellt, dass die Anwendung eines Doppelschneckenextruders mit einem größeren Länge-zu-Durchmesser-Verhältnis (L/D-Verhältnis) als bei dem eingangs gegebenen Doppelschneckenextruder dem Problem nicht abhilft, da auch bei einem Doppelschneckenextruder mit größerem L/D-Verhältnis die thermische Belastung der Polymerformmasse unerwünscht hoch wird, wenn die gewünschte verbesserte Dispergierung bei einem gewünschten hohen Gesamtgehalt an Füllstoffen, insbesondere Verstärkungsfüllstoffen, erreicht werden soll, da bei einer Vergrößerung des L/D-Verhältnisses eines Doppelschneckenextruders bei ansonsten gleichen Bedingungen die Temperatur der zu extrudierten Polymerformmasse etwa um 10 bis 20 °C pro einer zusätzlichen Länge des Doppelschneckenextruders zunimmt, die dem vierfachen des Außendurchmessers eines Schneckenelements entspricht, das die Innenwand des Doppelschneckenextruders abreinigt. Somit kann auch auf diesem Wege keine Polymerformmasse erhalten werden, die verbesserte Eigenschaften aufweist. Insbesondere ist es auf diese Weise nicht möglich, gleichzeitig die Oberflächeneigenschaften und die mechanischen Eigenschaften der Polymerformmasse zu verbessern.

Das beschriebene Problem stellt sich auch, wenn eine Polycarbonatformmasse mit einem hohen Anteil eines Verstärkungsfüllstoff durch Compoundierung hergestellt werden soll.

Aufgabe der vorliegenden Erfindung ist es daher, ein Verfahren zur Herstellung einer verbesserten Polycarbonatformmasse enthaltend einen Verstärkungsfüllstoff zur Verfügung zu stellen.

Insbesondere soll die erfindungsgemäße Polycarbonatformmasse folgende verbesserte Eigenschaften haben:
(1) verbesserte Oberflächeneigenschaften, insbesondere weniger Defekte, wiederum insbesondere weniger Defekte in Form von Erhebungen oder Vertiefungen in der Oberfläche, hervorgerufen durch unvollständig dispergierte Verstärkungsfüllstoffpartikel;
(2) und verbesserte mechanische Eigenschaften, insbesondere eine höhere Zähigkeit, eine höhere Kraftaufnahme, eine größere Dehnung, und eine größere Verformung, ganz insbesondere eine höhere Zähigkeit.

Überraschenderweise wurde gefunden, dass die Aufgabe gelöst wird durch ein Verfahren zur Herstellung einer Polycarbonatformmasse, die unter Verwendung eines Polycarbonatmasterbatches hergestellt wird, wobei dieser Polycarbonatmasterbatch ein Polycarbonat und einen Verstärkungsfüllstoff enthält und mittels eines kontinuierlichen Einwellenkneters compoundiert wird. Dabei beträgt der Gesamtgehalt an Verstärkungsfüllstoff im Polycarbonatmasterbatch von 30 bis 70 Gew.-%, bevorzugt 35 bis 65 Gew.-%, besonders bevorzugt 40 bis 60 Gew.-%, jeweils bezogen auf die Gesamtmasse des Masterbatches und der Gesamtgehalt an Verstärkungsfüllstoff in der Polycarbonatformmasse 0,5 bis 60 Gew.-%, bevorzugt 1,5 bis 50 Gew.-%, besonders bevorzugt 3 bis 40 Gew.-%, jeweils bezogen auf die Gesamtmasse der Polycarbonatformmasse.

Bezogen auf diesen einen Verstärkungsfüllstoff enthält der zur Herstellung der Polycarbonatformmasse jeweils verwendete Polycarbonatmasterbatch einen höheren Gehalt an Verstärkungsfüllstoff als die jeweils unter Verwendung dieses Polycarbonatmasterbatches hergestellte Polycarbonatformmasse. Bevorzugt ist der Gehalt des einen Verstärkungsfüllstoffs im Polycarbonatmasterbatch von 1,2 bis 140 mal so hoch, bevorzugt von 1,5 bis 100 mal so hoch, besonders bevorzugt von 2 bis 10 mal so hoch wie der Gehalt des einen Verstärkungsfüllstoff in der Formmasse.

Mit dem erfindungsgemäßen Verfahren werden verbesserte Polycarbonatformmassen erhalten. Ohne dass sich die Erfinder auf eine wissenschaftliche Theorie festlegen wollten, kann begründet angenommen werden, dass die verbesserten Eigenschaften der erfindungsgemäß hergestellten Polycarbonatformmasse dadurch begründet sind, dass auch der Polycarbonatmasterbatch verbesserte Eigenschaften aufweist, die wiederum insbesondere von einer verbesserten Dispergierung des Verstärkungsfüllstoffs oder der Verstärkungsfüllstoffe im Masterbatch herrühren.

Insbesondere überraschend ist diese Lösung der Aufgabe, weil kontinuierliche Einwellenkneter bisher nicht für eine besondere dispersive Mischwirkung bekannt waren, also bei deren Einsatz nicht eine wesentlich verbesserte Dispergierung und die daraus folgenden Verbesserungen zu erwarten waren. Eine dispersive Mischung zeichnet sich dadurch aus, dass Teilchen nicht nur in einem Volumen verteilt werden, sondern diese Teilchen vor allem zerkleinert werden.

Im Sinne der vorliegenden Erfindung wird unter einem Verstärkungsfüllstoff ein mineralischer Füllstoff verstanden, der geeignet ist, die Steifigkeit der erfindungsgemäß hergestellten Polycarbonatformmasse zu erhöhen. Bevorzugt ist der Verstärkungsfüllstoff ausgewählt aus der Gruppe umfassend Titandioxid (TiO₂), Talkum (Mg₃Si₄O₁₀(OH)₂), Dolomit CaMg[CO₃]₂, Kaolinit Al₄[(OH)₈|Si₄O₁₀] und Wollastonit Ca₃[Si₃O₉], bevorzugt ausgewählt aus der Gruppe umfassend Titandioxid (TiO₂) und Talkum (Mg₃Si₄O₁₀(OH)₂). Dies gilt gleichermaßen für die Masterbatchformmasse wie für die Polycarbonatformmasse.

Insbesondere werden mit dem erfindungsgemäßen Verfahren Polycarbonatformmassen erhalten, die folgende verbesserte Eigenschaften haben:
(1) verbesserte Oberflächeneigenschaften, insbesondere weniger Defekte, wiederum insbesondere weniger Defekte in Form von Erhebungen oder Vertiefungen in der Oberfläche, hervorgerufen durch unvollständig dispergierten Verstärkungsfüllstoffpartikel. Unvollständig dispergierte Verstärkungsfüllstoffpartikel können beispielsweise durch eine visuelle Analyse von Bildern von aus der erfindungsgemäßen Formmasse hergestellten Formkörpern ermittelt werden, die Partikelgrößenverteilung der unvollständig dispergierten Verstärkungsfüllstoffpartikel kann mittels einer Klassifizierung bewertet werden;
(2) und verbesserte mechanische Eigenschaften, insbesondere eine höhere Zähigkeit, eine höhere Kraftaufnahme, eine größere Dehnung, und eine größere Verformung, ganz insbesondere eine höhere Zähigkeit. Diese mechanischen Eigenschaften können beispielsweise mit einem Kerbschlagbiegeversuch nach DIN EN ISO 180/1A oder einem Schlagbiegeversuch nach DIN EN ISO 180/1U sowie einem Zugversuch nach DIN EN ISO 527 an spritzgegossenen Probekörpern bestimmt werden.

Eine solche erfindungsgemäß hergestellte Polycarbonatformmasse weist bessere, also verbesserte, Eigenschaften auf, als Polycarbonatformmassen, die mit Verfahren nach dem Stand der Technik hergestellt wurden, wobei die Polycarbonatformmassen, die nach dem Stand der Technik hergestellt wurden, die gleichen Bestandteile in denselben Anteilen aufweisen, wie die erfindungsgemäß hergestellte Polycarbonatformmasse.

Im Sinne der vorliegenden Erfindung wird unter dem Begriff "Formkörper" ein Gegenstand verstanden, der das Ergebnis einer Weiterverarbeitung der Formmasse ist. So ist beispielsweise sowohl ein aus der Formmasse durch Spritzguss erhältlicher Gegenstand, als auch eine durch Extrusion der Formmasse erhältliche Folie oder Platte als Formkörper anzusehen.

Als Titandioxid (TiO₂) wird bevorzugt die Modifikation Rutil mit einer Korngröße d₅₀ von 0,1 µm bis 5 µm, bevorzugt 0,3 bis 3 µm, eingesetzt. Beispiele für erfindungsgemäß brauchbare Titandioxid sind ausgewählt aus den käuflich zu erwerbenden Erzeugnissen Titandioxid Kronos 2230 und Titandioxid Kronos 2233; Hersteller beider Erzeugnisse ist die Kronos Titan GmbH Leverkusen.

Talkum (Mg₃Si₄O₁₀(OH)₂) wird bevorzugt mit einer Korngröße d₅₀ von 0,1 µm bis 10 µm, bevorzugt 0,3 bis 3 µm, eingesetzt. Beispielsweise können als Talkum die käuflich zu erwerbenden Erzeugnisse Jetfine 3CA der Firma Imerys Talc (Luzenac Europe SAS) oder Talkum HTP Ultra 5C der Firma IMI Fabi S.p.A. verwendet werden.

Die Korngröße d₅₀ ist dabei jeweils massebezogen und wurde nach ISO 1333 17-3 mit einem Sedigraph 5100, Fa. Micrometrics, Deutschland, bestimmt.

Mischungen aus Titandioxid und Talkum können in beliebigen Mischungsverhältnissen eingesetzt werden. Bevorzugt beträgt das Mischungsverhältnis von Titandioxid zu Talkum 1 : 60 bis 1 : 1, bevorzugt 1 : 30 bis 1 : 5, jeweils bezogen auf die Masse.

Die Partikel des jeweiligen Minerals, aus denen der Verstärkungsfüllstoff besteht, weisen bevorzugt ein Aspect-Verhältnis von 1:1 bis 1:7 auf.

Im Sinne der vorliegenden Erfindung werden unter "Polycarbonat" sowohl Homopolycarbonate als auch Copolycarbonate verstanden. Dabei können die Polycarbonate in bekannter Weise linear oder verzweigt sein. Erfindungsgemäß können auch Mischungen von Polycarbonaten verwendet werden.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch bevorzugt aromatische Dicarbonsäureester-Gruppen ersetzt sein. Derartige Polycarbonate, die sowohl Säurereste der Kohlensäure als auch Säurereste von, bevorzugt aromatischen Dicarbonsäuren in die Molekülkette eingebaut enthalten, werden als aromatische Polyestercarbonate bezeichnet.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Die thermoplastischen Polycarbonate einschließlich der thermoplastischen Polyestercarbonate haben mittlere Molekulargewichte Mw bestimmt durch GPC (Gelpermeationschromatographie in Methylenchlorid mit Polycarbonat als Standard) von 15 kg/mol bis 50 kg/mol, bevorzugt von 20 kg/mol bis 35 kg/mol, besonders bevorzugt von 23 kg/mol bis 33 kg /mol.

Die Herstellung der bevorzugten aromatischen Polycarbonate und aromatischen Polyestercarbonate erfolgt in bekannter Weise aus Diphenolen, Kohlensäure oder Kohlensäurederivaten und, im Falle der Polyestercarbonate, bevorzugt aromatischen Dicarbonsäuren oder Dicarbonsäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertné, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien, 1992, Seiten 117-299 verwiesen.

Die Herstellung aromatischer Polycarbonate und Polyestercarbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten. Ebenso ist eine Herstellung über ein Schmelzepolymerisationsverfahren durch Umsetzung von Diphenolen mit beispielsweise Diphenylcarbonat möglich.

Für die Herstellung von Polycarbonaten geeignete Dihydroxyarylverbindungen sind solche der Formel (1)

HO-Z-OH (1),

in welcher
Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2) 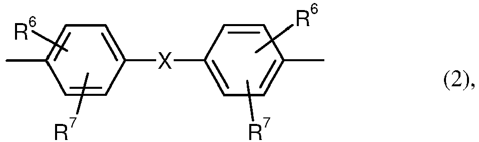 in der
R6 und R7 unabhängig voneinander für H, C1- bis C18-Alkyl-, C1- bis C18-Alkoxy, Halogen wie Cl oder Br oder für jeweils gegebenenfalls substituiertes Aryl- oder Aralkyl, bevorzugt für H oder C1 bis C12 Alkyl, besonders bevorzugt für H oder C1- bis C8-Alkyl und ganz besonders bevorzugt für H oder Methyl stehen, und
X für eine Einfachbindung, -SO2-, -CO-, -O-, -S-, C1- bis C6-Alkylen, C2- bis C5-Alkyliden oder C5- bis C6 Cycloalkyliden, welches mit C1- bis C6-Alkyl, vorzugsweise Methyl oder Ethyl, substituiert sein kann, ferner für C6- bis C12-Arylen, welches gegebenenfalls mit weiteren Heteroatome enthaltenden aromatischen Ringen kondensiert sein kann, steht.

Bevorzugt steht X für eine Einfachbindung, C1- bis C5-Alkylen, C2- bis C5-Alkyliden, C5- bis C6-Cycloalkyliden, -O-, -SO-, -CO-, -S-, -SO2-
oder für einen Rest der Formel (2a)

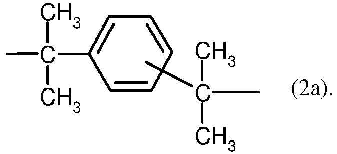

Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine abgeleitet von Isatin- oder Phenolphthaleinderivaten sowie deren kernalkylierte, kernarylierte und kernhalogenierte Verbindungen.

Bevorzugte Bisphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan (Bisphenol A (BPA)), 2,4-Bis-(4-hydroxyphenyl)-2-methylbutan, 1,3-Bis-[2-(4-hydroxyphenyl)-2-propyl]-benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol, 1,1-Bis-(4-hydroxyphenyl)-cyclohexan und 1,1-Bis-(4-hydroxyphenyl)-3,3,5-trimethylcyclohexan (Bisphenol TMC (BPTMC)), sowie die Bisphenole der Formeln (IV) bis (VI) 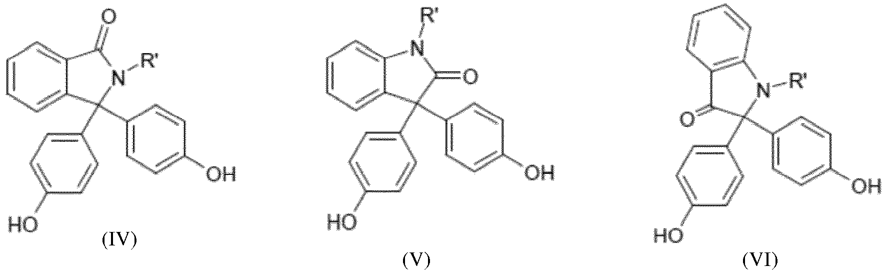 in denen R' jeweils für C₁-C₄-Alkyl, Aralkyl oder Aryl, bevorzugt für Methyl oder Phenyl steht.

Besonders bevorzugte Bisphenole sind 4,4'-Dihydroxydiphenyl, 1,1-Bis-(4-Hydroxyphenyl)-phenylethan, 2,2-Bis-(4-hydroxyphenyl)-propan (Bisphenol A (BPA)), 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC (BPTMC)) und die Dihydroxyverbindungen der Formeln (IV), (V) und (VI), in denen R' jeweils für C₁-C₄-Alkyl, Aralkyl oder Aryl, bevorzugt für Methyl oder Phenyl steht.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP A 105550/1986 beschrieben.

Im Fall der Homopolycarbonate wird nur ein Diphenol eingesetzt, im Fall der Copolycarbonate werden mehrere Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Insbesondere sind die erfindungsgemäßen Polycarbonate nur aus Atomen ausgewählt aus einem oder mehreren der Elemente Kohlenstoff (C), Wasserstoff (H), Sauerstoff (O), Stickstoff (N), Schwefel (S), Chlor (Cl) und Brom (Br) aufgebaut.

Bevorzugt ausgeschlossen als Copolycarbonate sind Polycarbonat-Polyorganosiloxan-Copolymere.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit C1- bis C30-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Diphenolen.

Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis des Monomers Bisphenol A einerseits und einem Monomer ausgewählt aus der Gruppe umfassend 1,1-Bis-(4-hydroxyphenyl)-3,3,5-trimethylcyclohexan und die Bisphenole der Formeln (IV) bis (VI) 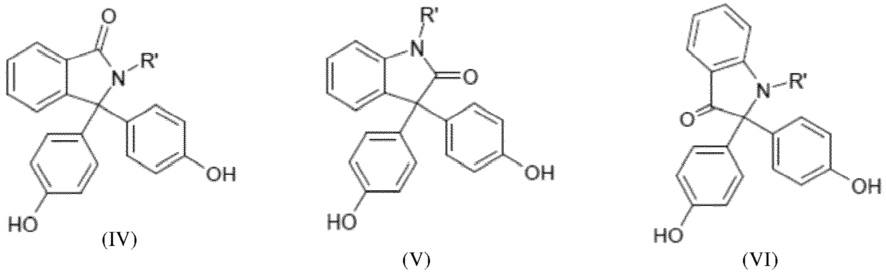 in denen R' jeweils für C₁-C₄-Alkyl, Aralkyl oder Aryl, bevorzugt für Methyl oder Phenyl steht, andererseits.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Am meisten bevorzugt als Polycarbonat ist aromatisches Polycarbonat auf Basis von Bisphenol A.

Der erfindungsgemäßen Polycarbonatformmasse können außer Titandioxid (TiOz),und/oder Talkum (Mg₃Si₄O₁₀(OH)₂), Dolomit CaMg[CO₃]₂, Kaolinit Al₄[(OH)₈|Si₄O₁₀] und/oder Wollastonit Ca₃[Si₃O₉] auch noch sonstige Formmassen-Bestandteile zugesetzt werden.

Der Gehalt der sonstigen Formmassen-Bestandteile in der erfindungsgemäß hergestellten Polycarbonatformmasse beträgt von 0 bis 37 Gew.-%, bevorzugt von 0 bis 20 Gew.-%, besonders bevorzugt 0 bis 10 Gew.-%.

Diese sonstigen Formmassen-Bestandteile sind beispielsweise andere für Polycarbonatformmassen übliche Füllstoffe, andere Thermoplaste, beispielsweise Acrylnitril-Butadien-Styrol-Copolymere, Styrol-Acrylnitril-Copolymere oder auch Polyester, oder andere Additive wie UV-Stabilisatoren, IR-Stabilisatoren, Thermostabilisatoren, Antistatika, Farbstoffe und Pigmente in den üblichen Mengen zugesetzt werden; gegebenenfalls können das Entformungsverhalten, das Fließverhalten, und/oder die Flammwidrigkeit noch durch Zusatz externer Entformungsmittel, Fließmittel, und/oder Flammschutzmittel verbessert werden (z. B. Alkyl- und Arylphosphite, -phosphate, - phosphane, -niedermolekulare Carbonsäureester, Halogenverbindungen, Salze, Kreide, Quarzmehl, Glas- und Kohlenstofffasern, Pigmente und deren Kombination. Solche Verbindungen werden z. B. in WO 99/55772, S. 15-25, und in "Plastics Additives", R. Gächter und H. Müller, Hanser Publishers 1983, beschrieben). Bevorzugt als Stabilisator ist ein Carbonsäureanhydrid modifiziertes alpha-Olefin-Polymer, insbesondere ein Maleinsäureanhydrid modifiziertes alpha-Olefin-Polymer.

Solche Carbonsäureanhydrid modifizierten alpha-Olefin-Polymere sind beispielsweise aus der WO2018037037A1 bekannt.

Die vorgenannten Polyester sind von den weiter oben beschriebenen Polyestercarbonaten zu unterscheiden. Bei den Polyestern im Sinne der vorliegenden Erfindung handelt es sich insbesondere um solche, die in den Abschnitten [0131] bis [0138] der US 2014/357769 A1 beschrieben sind.

Der Anteil an Polyester in der Formmasse beträgt maximal 0,9 Gew.-%, bevorzugt maximal 0,5 Gew.-%, besonders bevorzugt maximal 0,2 Gew.-%, insbesondere bevorzugt maximal 0,1 Gew.-%, ganz besonders bevorzugt von 0 bis 0,1 Gew.-%. Ganz insbesondere bevorzugt beträgt der Anteil an Polyester in der Formmasse 0 Gew.-%.

In einer erfindungsgemäßen Alternative beträgt der Anteil an Polyester in der Formmasse mindestens 22 Gew.-% bis maximal 58 Gew.-%, bevorzugt mindestens 23 Gew.-% bis maximal 55 Gew.-%, besonders bevorzugt mindestens 25 Gew.-% bis maximal 50 Gew.-%.

Geeignete Additive sind beispielsweise beschrieben in "Additives for Plastics Handbook, John Murphy, Elsevier, Oxford 1999 ", im "Plastics Additives Handbook, Hans Zweifel, Hanser, München 2001".

Geeignete Antioxidantien bzw. Thermostabilisatoren sind beispielsweise:
Alkylierte Monophenole, Alkylthiomethylphenole, Hydrochinone und alkylierte Hydrochinone, Tocopherole, Hydroxylierte Thiodiphenylether, Alkylidenbisphenole, O-, N- und S-Benzylverbindungen, Hydroxybenzylierte Malonate, Aromatische Hydroxybenzylverbindungen, Triazinverbindungen, Acylaminophenole, Ester von β-(3,5-Di-tert-butyl-4-hydroxyphenyl)propionsäure, Ester von β-(5-tert-Butyl-4-hydroxy-3-methylphenyl)propionsäure, Ester von β-(3,5-Dicyclohexyl-4-hydroxyphenyl)propionsäure, Ester von 3,5-Di-tert-butyl-4-hydroxyphenylessigsäure, Amide der β-(3,5-Di-tert-butyl-4-hydroxyphenyl)propionsäure, geeignete Thiosynergisten, sekundäre Antioxidantien, Phosphite und Phosphonite, Benzofuranone und Indolinone.

Bevorzugt sind organische Phosphite, Phosphonate und Phosphane, meist solche bei denen die organischen Reste völlig oder teilweise aus gegebenenfalls substituierten aromatischen Resten bestehen.

Als Komplexierungsmittel für Schwermetalle und zur Neutralisation von Alkalispuren sind o/m Phosphorsäuren, ganz oder teilweise veresterte Phosphate oder Phosphite geeignet.

Als Lichtschutzmittel (UV-Absorber) sind geeignet 2-(2'-Hydroxyphenyl)benzotriazole, 2-Hydroxybenzophenone, Ester von substituierten und unsubstituierten Benzoesäuren, Acrylate, sterisch gehinderte Amine, Oxamide sowie 2-(Hydroxyphenyl)-1,3,5-triazine bzw substituierte Hydroxyalkoxyphenyl, 1,3,5-triazole, bevorzugt sind substituierte Benzotriazole wie z. B. 2-(2'-hydroxy-5'-methyl-phenyl)-benzotriazol, 2-(2'-hydroxy-3',5'-di-t-butyl-phenyl)benzotriazol, 2-(2'-hydroxy-3'-tert.-butyl-5'-methyl-phenyl)-5-chlorobenzotriazol, 2-(2'-hydroxy-3',5'-tert.-butylphenyl)-5-chlorobenzotriazol, 2-(2'-hydroxy-5'-tert.-octylphenyl)benzotriazol, 2-(2'-hydroxy-3',5'-di-tert.-amylphenyl)benzotriazol, 2-[2'-hydroxy-3'-(3",4",5",6"-tetrahydrophthalimido-ehyl)-5'-methylphenyl]-benzotriazol und 2,2'-methylenebis[4-(1,1,3,3-tetramethylbutyl)-6-(2H-benzotriazol-2-yl)phenol] .

Polypropylenglykole allein oder in Kombination mit z. B. Sulfonen oder Sulfonamiden als Stabilisatoren können gegen die Schädigung durch Gamma-Strahlen verwendet werden.

Diese und andere Stabilisatoren können einzeln oder in Kombinationen verwendet werden und in den genannten Formen dem Polycarbonat zugesetzt werden.

Außerdem können Verarbeitungshilfsmittel wie Entformungsmittel, meist Derivate langkettiger Fettsäuren, zugesetzt werden. Bevorzugt sind z. B. Pentaerythrittetrastearat und Glycerinmonostearat. Sie werden allein oder im Gemisch eingesetzt.

Geeignete flammhemmende Additive sind Phosphatester, d. h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren.

Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.

Des weiteren können Farbmittel, wie organische Farbstoffe oder Pigmente oder anorganische Pigmente, IR-Absorber, einzeln, im Gemisch oder auch in Kombination mit Stabilisatoren, Glasfasern, Glas(hohl)kugeln, anorganischen, insbesondere mineralischen, Füllstoffen zugesetzt werden, wobei von diesen mineralischen Füllstoffen auch die Verstärkungsfüllstoffe, insbesondere Titandioxid (TiOz), Talkum (Mg₃Si₄O₁₀(OH)₂), Dolomit CaMg[CO₃]₂, Kaolinit Al₄[(OH)₈|Si₄O₁₀] und Wollastonit Ca₃[Si₃O₉], ganz insbesondere Titandioxid (TiOz) und Talkum (Mg₃Si₄O₁₀(OH)₂) umfasst sind.

Die erfindungsgemäße Polycarbonatformmasse, gegebenenfalls in Abmischung mit anderen Thermoplasten und/oder üblichen Additiven, kann überall dort eingesetzt werden, wo bereits bekannte Polycarbonatformmassen eingesetzt werden.

Ein kontinuierlicher Einwellenkneter weist eine einzelne rotierende Schneckenwelle auf, die synchron zur Rotation eine axiale Hin- und Herbewegung ausführt, sodass eine oszillierende Bewegung, insbesondere eine sinusförmige oszillierende Hin- und Herbewegung, resultiert. Die maximale Länge der Strecke in axialer Richtung, die die Schneckenwelle bei der Hinbewegung oder auch der Herbewegung zurücklegt, wird auch Hub genannt, wobei die Länge der Strecke, die die Schneckenwelle bei der Hinbewegung zurücklegt gleich der Länge der Strecke ist, die Schneckenwelle bei der Herbewegung zurücklegt.

Auf der Schneckenwelle eines kontinuierlichen Einwellenkneters befindet sich ein Schneckenbesatz mit einem Schneckenprofil ähnlich dem Profil der Schnecke eines Einwellenextruders, wie er üblicherweise zur Extrusion von plastischen Formmassen eingesetzt wird, allerdings mit dem Unterschied, dass die Schneckenelemente im überwiegenden Teil des kontinuierlichen Einwellenkneters unterbrochen und damit unterteilt sind, sodass sich sogenannte Knetflügel ausbilden. Der Schneckenbesatz eines kontinuierlichen Einwellenkneters besteht aus Schneckenelementen, welche modular auf der Schneckenwelle angeordnet werden können. Die Schneckenelemente können verschiedene Längen besitzen sowie Knetflügeprofile mit verschiedenen Geometrien und Steigungen aufweisen. Verwendet werden können sowohl 3- als auch 4-flügelige Schneckenelemente.

Im die Schneckenwelle umschließenden Gehäuse befinden sich Knetbolzen, welche ortsfest montiert sind. Üblicherweise befinden sich 3 Reihen (3-flügelig) oder 4 Reihen (4-flügelig) von Knetbolzen entlang des Gehäuses des kontinuierlichen Einwellenkneters. Die Knetbolzen können beispielsweise einen runden oder einen rautenförmigen Querschnitt sowie unterschiedliche Längen und Querschnittsflächenaufweisen.

Das Gehäuse und die Schneckenwelle des kontinuierlichen Einwellenkneters können sowohl beheizbar als auch kühlbar ausgeführt sein.

Der Außendurchmesser eines Schneckenelements wird auch als DA bezeichnet. Der Kernradius eines Schneckenelements wird als DI bezeichnet.

Im Sinne der vorliegenden Erfindung ist das L/D-Verhältnis der Quotient aus der Länge des Abschnitts der Schneckenwelle, der mit Schneckenelementen besetzt ist, und dem Außendurchmesser eines Schneckenelements.

Zum Austrag der Schmelze aus dem kontinuierlichen Einwellenkneter, z.B. über eine Düsenplatte, wird üblicherweise ein separates Austragsorgan verwendet, da der kontinuierliche Einwellenkneter selbst nicht genügend Druck zur Überwindung der Düsenplatte erzeugen kann. Bei dem Austragsorgan kann es sich zum Beispiel um einen Einwellenextruder, einen Zweiwellenextruder oder um eine Schmelzepumpe handeln. Diese Austragsorgane befinden sich hinter dem kontinuierlichen Einwellenkneter, bevorzugt unmittelbar hinter dem kontinuierlichen Einwellenkneter, möglicherweise aber auch von diesem noch beabstandet durch einen Fallschacht oder einen Flansch.

Kontinuierliche Einwellenkneter an und für sich sind beispielsweise bekannt aus: DE1908414A1, DD71190A, sowie aus dem Buch "Einführung in die Kunststoffverarbeitung", Carl Hanser Verlag, München, 8. Auflage, 2017, Seiten 104-105, der Veröffentlichung "Der Ko-Kneter in der Plastik-Industrie" in der Zeitschrift Schweizer Maschinenmarkt, 1960, Seiten 54-61 und dem Buch "Mixing in polymer processing", Marcel Dekker Inc., 1991, Seiten 200-219.

Auch ist z.B. aus dem Buch "Einführung in die Kunststoffverarbeitung", Carl Hanser Verlag, München, 8. Auflage, 2017, Seiten 104-105 und dem Buch "Mixing in polymer processing", Marcel Dekker Inc., 1991, Seiten 200-219 bekannt, dass kontinuierliche Einwellenkneter eine gute distributive Mischwirkung erbringen.

Jedoch ist im Stand der Technik nicht offenbart, dass mit einem kontinuierlichen Einwellenkneter eine verbesserte dispersive Mischung erzielt werden kann, also eine Mischung, bei der Teilchen nicht nur in einem Volumen verteilt werden, sondern diese Teilchen zusätzlich noch zerkleinert werden. Auch ist nirgendwo im Stand der Technik offenbart, dass es mit einem kontinuierlichen Einwellenkneter möglich ist, ein Polycarbonatmasterbatch herzustellen, mit dem es möglich ist, eine Polycarbonatformmasse enthaltend einen Verstärkungsfüllstoff herzustellen, die verbesserte Eigenschaften aufweist. Insbesondere ist im Stand der Technik nirgendwo ein Verfahren zur Herstellung einer Polycarbonatformmasse enthaltend einen Verstärkungsfüllstoff offenbart, wobei der Gesamtgehalt an Verstärkungsfüllstoff 0,5 bis 60 Gew.-%, bevorzugt 1,5 bis 50 Gew.-%, besonders bevorzugt 3 bis 40 Gew.-% beträgt, jeweils bezogen auf die Gesamtmasse der Polycarbonatformmasse, und wobei die Polycarbonatformmasse unter Verwendung eines Polycarbonatmasterbatches hergestellt wird, der wiederum mittels eines kontinuierlichen Einwellenkneters hergestellt ist, und wobei dieser Polycarbonatmasterbatch einen Gesamtgehalt an Verstärkungsfüllstoff von 30 bis 70 Gew.-%, bevorzugt 35 bis 65 Gew.-%, besonders bevorzugt 40 bis 60 Gew.-% aufweist, jeweils bezogen auf die Gesamtmasse des Masterbatches. Der Verstärkungsfüllstoff ist jeweils bevorzugt ausgewählt aus der Gruppe umfassend Titandioxid (TiOz), Talkum (Mg₃Si₄O₁₀(OH)₂), Dolomit CaMg[CO₃]₂, Kaolinit Al₄[(OH)₈|Si₄O₁₀] und Wollastonit Ca₃[Si₃O₉|, bevorzugt ausgewählt aus der Gruppe umfassend Titandioxid (TiO₂) und Talkum (Mg₃Si₄O₁₀(OH)₂).

Eine solche erfindungsgemäß hergestellte Polycarbonatformmasse weist bessere Eigenschaften auf als Polycarbonatformmassen, die mit Verfahren nach dem Stand der Technik hergestellt wurden, wobei die Polycarbonatformmassen, die nach dem Stand der Technik hergestellt wurden, die gleichen Bestandteile in denselben Anteilen aufweisen, wie die erfindungsgemäß hergestellte Polycarbonatformmasse.

Erfindungsgemäß bevorzugt wird zur Herstellung des Polycarbonatmasterbatches ein kontinuierlicher Einwellenkneter mit einem DA/Hub-Verhältnis von 4 bis 7 verwendet, besonders bevorzugt von 5,5 bis 6,7.

Weiter erfindungsgemäß bevorzugt weist der kontinuierliche Einwellenkneter ein L/D-Verhältnis von 10 bis 25 auf.

Weiter erfindungsgemäß bevorzugt weist der kontinuierliche Einwellenkneter ein DA/DI-Verhältnis von 1,5 bis 1,8 auf, besonders bevorzugt von 1,55 bis 1,71.

Weiter erfindungsgemäß bevorzugt weisen die Schneckenelemente des kontinuierlichen Einwellenkneters einen Außendurchmesser DA von 30 bis 200 mm auf.

Weiter erfindungsgemäß bevorzugt weist der kontinuierliche Einwellenkneter eine Gangtiefe, definiert als (DA - DI)/2, von 5 bis 92 mm auf.

Bei dem erfindungsgemäß eingesetzten kontinuierlichen Einwellenkneter kann es sich beispielsweise um einen Buss Ko-Kneter mit den Bezeichnungen Mx oder MKS oder MDK der Firma Buss AG (Schweiz) als auch um Einwellenkneter mit der Bezeichnung SJW der Fa. Xinda (China) sowie Einwellenkneter mit der Bezeichnung CK der Fa. X-Compound (Schweiz) handeln.

Auch Gegenstand der vorliegenden Erfindung ist ein Masterbatch, das nach dem erfindungsgemäßen Verfahren hergestellt wurde.

Auch Gegenstand der vorliegenden Erfindung ist eine Formmasse, die nach dem erfindungsgemäßen Verfahren hergestellt wurde.

Die erfindungsgemäße Formmasse ist auch dadurch gekennzeichnet, dass sie nach Abkühlung ohne weitere Verarbeitung zum Spritzguss verwendbar ist.

Weiterer Gegenstand der Erfindung ist die Verwendung der erfindungsgemäßen Formmasse zur Herstellung eines Formkörpers, insbesondere eines durch Spritzguss erhältlichen Gegenstands oder einer durch Extrusion der Formmasse erhältlichen Folie oder Platte oder eines Profils, oder eines Reflektors für eine Leuchte oder eines Strukturbauteils, beispielsweise für den Automobilbau.

Aufgrund der guten Oberflächeneigenschaften der Formmasse kann der daraus hergestellte Formkörper leicht galvanisiert oder metallisch bedampft werden.

Nachfolgend wird die Erfindung anhand von Beispielen erläutert, ohne dass die Erfindung dadurch auf diese Beispiele beschränkt werden soll.

### Versleichsbeispiele

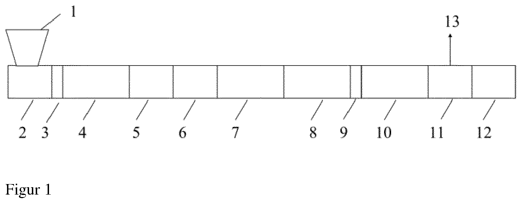

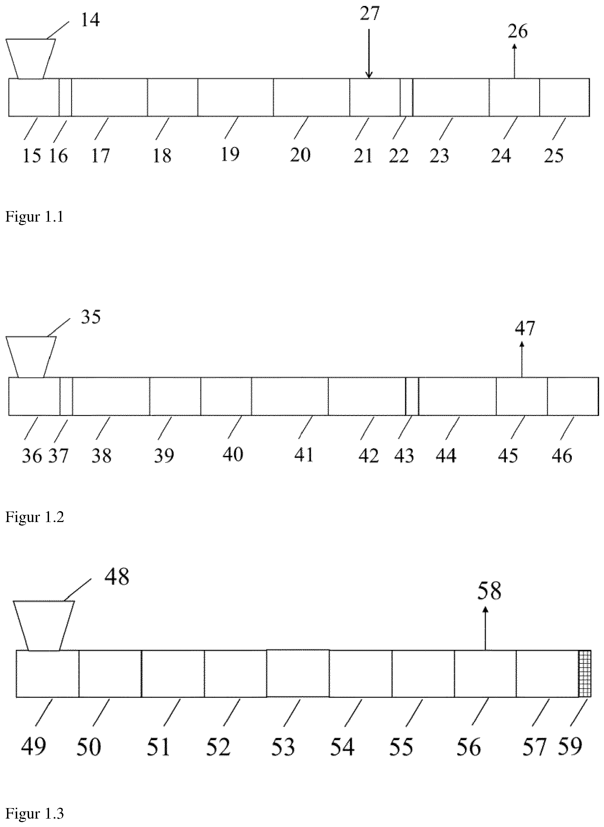

Der in Vergleichsbeispiel 1 beschriebene Versuch wurde mit einem Doppelschneckenextruder ZSK92 Mc+ der Firma Coperion GmbH durchgeführt. Der verwendete Doppelschneckenextruder besitzt einen Gehäuseinnendurchmesser von 93 mm und ein L/D-Verhältnis von 36. Den prinzipiellen Aufbau des verwendeten Extruders zeigt Figur 1.3. Der Doppelschneckenextruder weist ein aus 9 Teilen bestehendes Gehäuse auf, in welchem 2 gleichsinnig drehende, miteinander kämmende Wellen (nicht gezeigt) angeordnet sind.

In Beispiel 1 erfolgte die Dosierung aller Bestandteile der Polycarbonatformmasse über den Haupteinzug in Gehäuse 49 über den abgebildeten Einzugstrichter 48.

Im Bereich der Gehäuse 49 bis 52 befindet sich eine Förderzone für ein Polycarbonatgranulat, ein Titandioxidpulver sowie die sonstigen Formmassen-Bestandteile.

Im Bereich der Gehäuse 52 bis 54 befindet sich eine Plastifizierzone, welche aus verschiedenen zwei- und dreigängigen Knetblöcken verschiedener Breite sowie Zahnmischelementen besteht.

Im Bereich der Gehäuse 54 bis 55 befindet sich eine Mischzone, welche aus Knetelementen, Zahnmischelementen und Förderelementen besteht.

In Gehäuseteil 56 befindet sich die seitliche Entgasungsöffnung 58, welche an einen zweiwelligen Seitenentgasungsextruder (nicht gezeigt) und eine daran anschließende Absaugvorrichtung (nicht gezeigt) angeschlossen ist.

In Gehäuse 57 befindet sich die Druckaufbauzone und im Anschluss daran eine Schmelzefiltration in Form eines Doppelkolbensiebwechslers K-SWE-250 der Firma Kreyenborg GmbH. In jeder der beiden Siebkavitäten des Doppelkolbensiebwechslers befindet sich eine Brecherplatte sowie ein 4-lagiges Schmelzefilterpaket bestehend aus Quadratmaschengeweben in Leinenbindung mit den Maschenweiten 315/200/315/800 µm. Im Anschluss an den Siebwechsler folgt ein Anfahrventil der Firma Trendelkamp GmbH (nicht gezeigt) und eine Unterwassergranulierung EAC-7 der Firma Gala mit einer Düsenplatte mit 100 Löchern (nicht gezeigt).

In Beispiel 1 wurden Polycarbonatgranulat und eine Pulvermischung enthaltend Titandioxidpulver mittels handelsüblicher gravimetrischer Differentialdosierwaagen in den Einzugstrichter 48 dosiert.

Die Granulierung erfolgte in Beispiel 1 als Unterwassergranulierung.

Die Messung der Schmelzetemperatur erfolgte in Beispiel 1 mittels eines in das Gehäuse des Anfahrventils eingeschraubten Thermoelements.

Die in den Vergleichsbeispielen 3 und 5 beschriebenen Versuche wurden mit einem Doppelschneckenextruder ZE60A UTXi der Firma KraussMaffei Berstorff GmbH durchgeführt. Der verwendete Doppelschneckenextruder besitzt einen Gehäuseinnendurchmesser von 65 mm und ein L/D-Verhältnis von 43. Den prinzipiellen Aufbau des verwendeten Extruders zeigt Figur 1. Der Doppelschneckenextruder weist ein aus 11 Teilen bestehendes Gehäuse auf, in welchem 2 gleichsinnig drehende, miteinander kämmende Wellen (nicht gezeigt) angeordnet sind.

In den Beispielen 3 und 5 erfolgte die Dosierung aller Bestandteile der Polycarbonatformmasse über den Haupteinzug in Gehäuse 2 über den abgebildeten Einzugstrichter 1.

Im Bereich der Gehäuse 2 bis 7 befindet sich eine Förderzone für ein Polycarbonatgranulat, ein Titandioxidpulver sowie die sonstigen Formmassen-Bestandteile.

Im Bereich des Gehäuses 8 befindet sich eine Plastifizierzone, welche aus verschiedenen zwei- und dreigängigen Knetblöcken verschiedener Breite sowie Zahnblöcken besteht.

Im Bereich der Gehäuse 9 bis 10 befindet sich eine Mischzone, welche aus Knetelementen, Zahnblöcken und Förderelementen besteht.

In Gehäuseteil 11 befindet sich die Entgasungsöffnung 13, welche an eine Absaugvorrichtung (nicht gezeigt) angeschlossen ist.

In Gehäuse 12 befindet sich die Druckaufbauzone und im Anschluss daran eine Düsenplatte mit 29 Löchern.

In den Beispielen 3 und 5 wurden Polycarbonatgranulat und eine Pulvermischung enthaltend Titandioxidpulver mittels handelsüblicher gravimetrischer Differentialdosierwaagen in den Einzugstrichter 1 dosiert. Darüber hinaus wurde weiteres Titandioxidpulver über einer separate handelsübliche gravimetrische Differentialdosierwaage in den Einzugstrichter 1 dosiert.

Die Granulierung erfolgte in den Beispielen 3 und 5 als Stranggranulierung nach Wasserbadkühlung.

Die Messung der Schmelzetemperatur erfolgte in den Beispielen 3 und 5 mittels Einstechen eines Thermoelements in die austretende Schmelze des mittleren Schmelzestrangs direkt vor der Düsenplatte.

Der in Vergleichsbeispiel 7 beschriebene Versuch wurde mit einem Doppelschneckenextruder ZE60A UTXi der Firma KraussMaffei Berstorff GmbH durchgeführt. Der verwendete Doppelschneckenextruder besitzt einen Gehäuseinnendurchmesser von 65 mm und ein L/D-Verhältnis von 43. Den prinzipiellen Aufbau des verwendeten Extruders zeigt Figur 1.2. Der Doppelschneckenextruder weist ein aus 11 Teilen bestehendes Gehäuse auf, in welchem 2 gleichsinnig drehende, miteinander kämmende Wellen (nicht gezeigt) angeordnet sind.

In Beispiel 7 erfolgte die Dosierung aller Bestandteile der Polycarbonatformmasse über den Haupteinzug in Gehäuse 36 über den abgebildeten Einzugstrichter 35.

Im Bereich der Gehäuse 36 bis 40 befindet sich eine Förderzone für ein Polycarbonatgranulat, ein Talkumpulver sowie die sonstigen Formmassen-Bestandteile.

Im Bereich des Gehäuses 41 befindet sich eine Plastifizierzone, welche aus verschiedenen zwei- und dreigängigen Knetblöcken verschiedener Breite sowie Zahnblöcken besteht.

Im Bereich der Gehäuse 43 und 44 befindet sich eine Mischzone, welche aus Knetelementen, Zahnblöcken und Förderelementen besteht.

In Gehäuseteil 45 befindet sich die Entgasungsöffnung 47, welche an eine Absaugvorrichtung (nicht gezeigt) angeschlossen ist.

In Gehäuse 46 befindet sich die Druckaufbauzone und im Anschluss daran eine Düsenplatte mit 29 Löchern.

In Beispiel 7 wurden Polycarbonatgranulat, ein Talkumpulver und die sonstigen Formmassen-Bestandteile mittels handelsüblicher gravimetrischer Differentialdosierwaagen in den Einzugstrichter 35 dosiert.

Die Granulierung erfolgte in Beispiel 7 als Stranggranulierung nach Wasserbadkühlung.

Die Messung der Schmelzetemperatur erfolgte in Beispiel 7 mittels Einstechen eines Thermoelements in die austretende Schmelze des mittleren Schmelzestrangs direkt vor der Düsenplatte.

Die in den Vergleichsbeispielen 9, 11 und 14 beschriebenen Versuche wurden mit einem Doppelschneckenextruder ZE60A UTXi der Firma KraussMaffei Berstorff GmbH durchgeführt. Der verwendete Doppelschneckenextruder besitzt einen Gehäuseinnendurchmesser von 65 mm und ein L/D-Verhältnis von 43. Den prinzipiellen Aufbau des verwendeten Extruders zeigt Figur 1.1. Der Doppelschneckenextruder weist ein aus 11 Teilen bestehendes Gehäuse auf, in welchem 2 gleichsinnig drehende, miteinander kämmende Wellen (nicht gezeigt) angeordnet sind.

In den Beispielen 9, 11 und 14 erfolgte die Dosierung aller festen Bestandteile der Polycarbonatformmasse über den Haupteinzug in Gehäuse 15 über den abgebildeten Einzugstrichter 14. In Beispiel 9 wurde ein flüssiges Flammschutzmittel über die Einspritzdüse 27 in Gehäuseteil 21 in die geschmolzene Formmasse zugegeben.

Im Bereich der Gehäuse 15 bis 18 befindet sich eine Förderzone für ein Polycarbonatgranulat, ein Titandioxidpulver sowie die sonstigen Formmassen-Bestandteile.

Im Bereich des Gehäuses 19 befindet sich eine Plastifizierzone, welche aus verschiedenen zwei- und dreigängigen Knetblöcken verschiedener Breite sowie Zahnblöcken besteht.

Im Bereich der Gehäuse 21 bis 23 befindet sich eine Mischzone, welche aus Knetelementen, Zahnblöcken und Förderelementen besteht.

In Gehäuseteil 24 befindet sich die Entgasungsöffnung 26, welche an eine Absaugvorrichtung (nicht gezeigt) angeschlossen ist.

In Gehäuse 25 befindet sich die Druckaufbauzone und im Anschluss daran eine Düsenplatte mit 29 Löchern.

In Beispiel 9 wurden Polycarbonatgranulat, eine Titandioxidpulver enthaltende Pulvermischung und die sonstigen Formmassen-Bestandteile mittels handelsüblicher gravimetrischer Differentialdosierwaagen in den Einzugstrichter 14 dosiert.

In Beispiel 11 wurden Polycarbonatgranulat, Titandioxidpulver, eine zusätzliches Titandioxidpulver enthaltende Pulvermischung und die sonstigen Formmassen-Bestandteile mittels handelsüblicher gravimetrischer Differentialdosierwaagen in den Einzugstrichter 14 dosiert.

In Beispiel 14 wurden Polycarbonatgranulat, der in Beispiel 13 hergestellte Polycarbonatmasterbatch und die sonstigen Formmassen-Bestandteile mittels handelsüblicher gravimetrischer Differentialdosierwaagen in den Einzugstrichter 14 dosiert.

Die Granulierung erfolgte in den Beispielen 9, 11 und 14 als Stranggranulierung nach Wasserbadkühlung.

Die Messung der Schmelzetemperatur erfolgte in den Beispielen 9, 11 und 14 mittels Einstechen eines Thermoelements in die austretende Schmelze des mittleren Schmelzestrangs direkt vor der Düsenplatte.

Der in Vergleichsbeispiel 13 beschriebene Versuch zur Herstellung eines Polycarbonatmasterbatchs wurde mit einem Doppelschneckenextruder ZE60A UTXi der Firma

KraussMaffei Berstorff GmbH durchgeführt. Der verwendete Doppelschneckenextruder besitzt einen Gehäuseinnendurchmesser von 65 mm und ein L/D-Verhältnis von 43. Den prinzipiellen Aufbau des verwendeten Extruders zeigt Figur 1.1 mit dem Unterschied, dass in Gehäuse 20 eine Seitenfüttereinrichtung angeflanscht ist (nicht gezeigt). Der Doppelschneckenextruder weist ein aus 11 Teilen bestehendes Gehäuse auf, in welchem 2 gleichsinnig drehende, miteinander kämmende Wellen (nicht gezeigt) angeordnet sind.

In Beispiel 13 erfolgte die Dosierung des Polycarbonatgranulats, der Hälfte des Titandioxidpulvers sowie des Stabilisators über den Haupteinzug in Gehäuse 15 über den abgebildeten Einzugstrichter 14. Die übrige Hälfte des Titandioxidpulvers wurde über eine Seitenfüttereinrichtung in den Extruder in Gehäuse 20 zugegeben.

Im Bereich der Gehäuse 15 bis 18 befindet sich eine Förderzone für ein Polycarbonatgranulat, ein Titandioxidpulver sowie die sonstigen Masterbatch-Bestandteile.

Im Bereich des Gehäuses 19 befindet sich eine Plastifizierzone, welche aus verschiedenen zwei- und dreigängigen Knetblöcken verschiedener Breite sowie Zahnblöcken besteht.

Im Bereich des Gehäuses 20 befindet sich eine Einzugszone bestehend aus Förderelementen zum einziehen des Titandioxidpulvers und zum Fördern des Schmelze-Pulver Gemischs.

Im Bereich der Gehäuse 21 bis 23 befindet sich eine Mischzone, welche aus Knetelementen, Zahnblöcken und Förderelementen besteht.

In Gehäuseteil 24 befindet sich die Entgasungsöffnung 26, welche an eine Absaugvorrichtung (nicht gezeigt) angeschlossen ist.

In Gehäuse 25 befindet sich die Druckaufbauzone und im Anschluss daran eine Düsenplatte mit 29 Löchern.

In Beispiel 13 wurden Polycarbonatgranulat, die Hälfte des Titandioxidpulvers und das Stabilisatorgranulat mittels handelsüblicher gravimetrischer Differentialdosierwaagen in den Einzugstrichter 14 dosiert sowie die übrige Hälfte des Titandioxidpulvers mittels einer handelsüblichen gravimetrischen Differentialdosierwaage zunächst in eine zweiwellige Seitenfüttereinrichtung und von dort in den Zweischneckenextruder dosiert.

Die Granulierung erfolgte in Beispiel 13 als Stranggranulierung nach Wasserbadkühlung.

Die Messung der Schmelzetemperatur erfolgte in Beispiel 13 mittels Einstechen eines Thermoelements in die austretende Schmelze des mittleren Schmelzestrangs direkt vor der Düsenplatte.

### Erfindungsgemäße Beispiele

Bei den erfindungsgemäßen Beispielen 2.1 / 2.1.1 wurde zunächst mit einem kontinuierlichen Einwellenkneter vom Typ Ko-Kneter Mx 58 der Fa. Buss AG ein Titandioxid enthaltender Polycarbonatmasterbatch hergestellt. Anschließend wurde aus diesem Polycarbonatmasterbatch, Polycarbonat und sonstigen Formmassen-Bestandteilen mit einem Doppelschneckenextruder ZSK92 Mc+ der Firma Coperion GmbH eine Polycarbonatformmasse mit verbesserten Eigenschaften hergestellt.

Der in Beispiel 2.1 für die Herstellung des erfindungsgemäßen Polycarbonatmasterbatchs verwendete Ko-Kneter besitzt einen Gehäuseinnendurchmesser von 58,4 mm, einen Schneckenelemente-Außendurchmesser DA von 57,7 mm im Bereich von Lagerstellen, einen Schneckenelemente-Außendurchmesser DA von 56,3 mm im Bereich außerhalb der Lagerstellen, ein L/D-Verhältnis von 15, ein DA/DI-Verhältnis von 1,55 vom Anfang der Ko-Kneterwelle bis zum Stauring am Ende der Aufschmelzzone, ein DA/DI-Verhältnis von 1,71 ab dem Stauring bis zum Ender der Ko-Kneterwelle sowie ein DA/Hub-Verhältnis von 5,5. Die Gesamtlänge der Bereiche der Lagerstellen beträgt ca. 15 % der Gesamtlänge der Schneckenwelle des kontinuierlichen Einwellenkneters. Der Bereich vom Anfang der Ko-Kneterwelle bis zum Stauring beträgt 40% der Gesamtlänge der Ko-Kneterwelle.

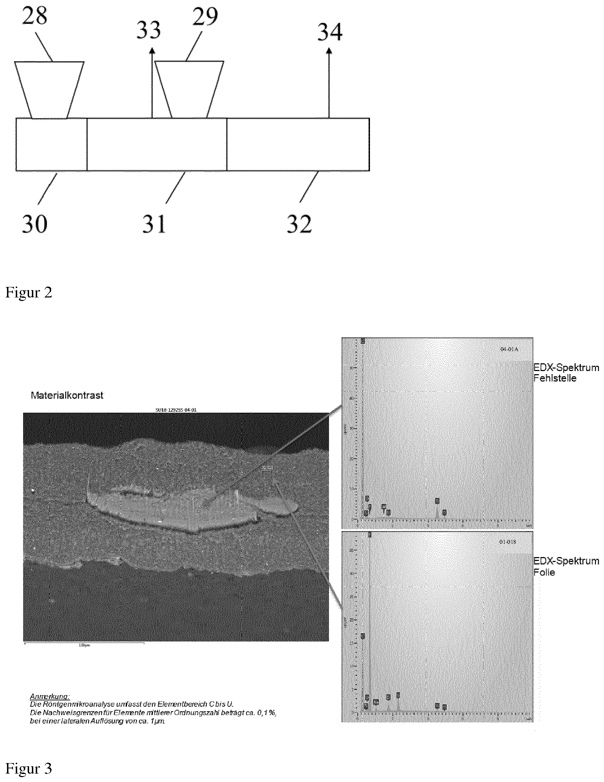

Den prinzipiellen Aufbau des verwendeten kontinuierlichen Einwellenkneters zeigt Figur 2. Der kontinuierliche Einwellenkneter weist ein aus 3 Teilen bestehendes Gehäuse auf, in welchem eine sich drehende und gleichzeitig eine axiale Hin- und Herbewegung ausführende Schneckenwelle (nicht gezeigt) angeordnet ist.

Zum Austrag der Schmelze aus dem kontinuierlichen Einwellenkneter wird ein Einschneckenextruder (nicht in Figur 2 gezeigt) mit einem Gehäuseinnendurchmesser von 110 mm und einem L/D-Verhältnis von 6 verwendet. Der Einschneckenextruder ist direkt an den kontinuierlichen Einwellenkneter angeflanscht und dient lediglich dem Druckaufbau zur Granulierung der Polycarbonatformmasse. Eine signifikante Vermischung und/oder Zerkleinerung der Formmassenbestandteile erfolgt in dem Einschneckenextruder nicht. Am Ende des Einschneckenextruders befindet sich eine Düsenplatte mit einem Durchmesser von 118,5 mm zur Ausformung der Schmelzestränge. In der Düsenplatte befinden sich 66 Bohrungen mit jeweils 3 mm Durchmesser zum Austrag der Schmelze. Die Granulierung der aus der Düsenplatte austretenden Schmelzestränge erfolgte mittels Heißabschlagsgranulierung, d.h. die Schmelzestränge wurden durch mit Wasser überströmte, rotierende Messer abgehackt.

Im erfindungsgemäßen Beispiel 2.1 zur Herstellung eines Polycarbonatmasterbatchs erfolgte die Dosierung des Titandioxidpulvers in Gehäuse 31 über den abgebildeten Einzugstrichter 29. Das Polycarbonat sowie die sonstigen Masterbatch-Bestandteile wurden dem kontinuierlichen Einwellenkneter in Gehäuse 30 über den Einzugstrichter 28 zugeführt.

Im Bereich des Gehäuses 30 befindet sich eine Förderzone bestehend aus Förderelementen für ein Polycarbonatgranulat und die sonstigen Masterbatch-Bestandteile.

Im Bereich des Gehäuses 31 befindet sich eine Plastifizierzone bestehend aus verschiedenen Misch- und Knetelementen. Am Ende der Plastifizierzone direkt vor der Entlüftungsöffnung 33 befindet sich ein Stauring mit einem Innendurchmesser von 43 mm. Weiterhin befindet sich am Ende von Gehäuse 31 eine Förderzone für Titandioxidpulver bestehend aus Förderelementen.

Im Bereich des Gehäuses 32 befinden sich eine Förderzone bestehend aus Förderelementen sowie zwei Mischzonen bestehend aus verschiedenen Misch- und Knetelementen; eine am Anfang und eine am Ende des Gehäuses. Weiterhin befindet sich in Gehäuse 32 zwischen den Mischzonen eine Entgasungszone welche aus Förderelementen besteht.

In Gehäuseteil 32 befindet sich die Entgasungsöffnung 34, welche an eine Absaugvorrichtung (nicht gezeigt) angeschlossen ist.

Für die Herstellung der erfindungsgemäßen Polycarbonatformmasse des Beispiels 2.1.1 wurde ein Doppelschneckenextruder ZSK92 Mc+ der Firma Coperion GmbH verwendet. Der verwendete Doppelschneckenextruder besitzt einen Gehäuseinnendurchmesser von 93 mm und ein L/D-Verhältnis von 36. Der Doppelschneckenextruder weist ein aus 9 Teilen bestehendes Gehäuse auf, in welchem 2 gleichsinnig drehende, miteinander kämmende Wellen (nicht gezeigt) angeordnet sind. Den prinzipiellen Aufbau des verwendeten Extruders zeigt Figur 1.3.

In Beispiel 2.1.1 erfolgte die Dosierung aller Bestandteile der Polycarbonatformmasse über den Haupteinzug in Gehäuse 49 über den abgebildeten Einzugstrichter 48.

Im Bereich der Gehäuse 49 bis 52 befindet sich eine Förderzone für ein Polycarbonatgranulat, einen Polycarbonatmasterbatch sowie die sonstigen Formmassen-Bestandteile.

Im Bereich der Gehäuse 52 bis 54 befindet sich eine Plastifizierzone, welche aus verschiedenen zwei- und dreigängigen Knetblöcken verschiedener Breite sowie Zahnmischelementen besteht.

Im Bereich der Gehäuse 54 bis 55 befindet sich eine Mischzone, welche aus Knetelementen, Zahnmischelementen und Förderelementen besteht.

In Gehäuseteil 56 befindet sich die seitliche Entgasungsöffnung 58, welche an einen zweiwelligen Seitenentgasungsextruder (nicht gezeigt) und eine daran anschließende Absaugvorrichtung (nicht gezeigt) angeschlossen ist.

In Gehäuse 57 befindet sich die Druckaufbauzone und im Anschluss daran eine Schmelzefiltration in Form eines Doppelkolbensiebwechslers K-SWE-250 der Firma Kreyenborg GmbH. In jeder der beiden Siebkavitäten des Doppelkolbensiebwechslers befindet sich eine Brecherplatte sowie ein 4-lagiges Schmelzefilterpaket bestehend aus Quadratmaschengeweben in Leinenbindung mit den Maschenweiten 315/200/315/800 µm. Im Anschluss an den Siebwechsler folgt ein Anfahrventil der Firma Trendelkamp GmbH (nicht gezeigt) und eine Unterwassergranulierung EAC-7 der Firma Gala mit einer Düsenplatte mit 100 Löchern (nicht gezeigt).

In Beispiel 2.1.1 wurden Polycarbonatgranulat, eine Pulvermischung sowie der in dem erfindungsgemäßen Beispiel 2.1 hergestellte Polycarbonatmasterbatch mittels handelsüblicher gravimetrischer Differentialdosierwaagen in den Einzugstrichter 48 dosiert.

Die Granulierung erfolgte in Beispiel 2.1.1 als Unterwassergranulierung.

Die Messung der Schmelzetemperatur erfolgte in Beispiel 2.1.1 mittels eines in das Gehäuse des Anfahrventils eingeschraubten Thermoelements.

Bei den erfindungsgemäßen Beispielen 4.1 / 4.1.1, 4.2 / 4.2.1, 6 /6.1, 10 / 10.1 und 12 / 12.1 wurde zunächst mit einem kontinuierlichen Einwellenkneter vom Typ Ko-Kneter Mx 58 der Fa. Buss AG ein Titandioxid enthaltender Polycarbonatmasterbatch hergestellt. Anschließend wurde aus diesem Polycarbonatmasterbatch, Polycarbonat und sonstigen Formmassen-Bestandteilen mit einem Doppelschneckenextruder ZE60A UTXi der Firma KraussMaffei Berstorff GmbH eine Polycarbonatformmasse mit verbesserten Eigenschaften hergestellt.

Der für die Herstellung des Polycarbonatmasterbatches verwendete Ko-Kneter besitzt einen Gehäuseinnendurchmesser von 58,4 mm, einen Schneckenelemente-Außendurchmesser DA von 57,7 mm im Bereich von Lagerstellen, einen Schneckenelemente-Außendurchmesser DA von 56,3 mm im Bereich außerhalb der Lagerstellen, ein L/D-Verhältnis von 15, ein DA/DI-Verhältnis von 1,55 vom Anfang der Ko-Kneterwelle bis zum Stauring am Ende der Aufschmelzzone, ein DA/DI-Verhältnis von 1,71 ab dem Stauring bis zum Ender der Ko-Kneterwelle sowie ein DA/Hub-Verhältnis von 5,5. Die Gesamtlänge der Bereiche der Lagerstellen beträgt ca. 15 % der Gesamtlänge der Schneckenwelle des kontinuierlichen Einwellenkneters. Der Bereich vom Anfang der Ko-Kneterwelle bis zum Stauring beträgt 40% der Gesamtlänge der Ko-Kneterwelle.

Den prinzipiellen Aufbau des verwendeten kontinuierlichen Einwellenkneters zeigt Figur 2. Der kontinuierliche Einwellenkneter weist ein aus 3 Teilen bestehendes Gehäuse auf, in welchem eine sich drehende und gleichzeitig eine axiale Hin- und Herbewegung ausführende Schneckenwelle (nicht gezeigt) angeordnet ist.

Zum Austrag der Schmelze aus dem kontinuierlichen Einwellenkneter wird ein Einschneckenextruder (nicht in Figur 2 gezeigt) mit einem Gehäuseinnendurchmesser von 110 mm und einem L/D-Verhältnis von 6 verwendet. Der Einschneckenextruder ist direkt an den kontinuierlichen Einwellenkneter angeflanscht und dient lediglich dem Druckaufbau zur Granulierung der Polycarbonatformmasse. Eine signifikante Vermischung und/oder Zerkleinerung der Formmassenbestandteile erfolgt in dem Einschneckenextruder nicht. Am Ende des Einschneckenextruders befindet sich eine Düsenplatte mit einem Durchmesser von 118,5 mm zur Ausformung der Schmelzestränge. In der Düsenplatte befinden sich 66 Bohrungen mit jeweils 3 mm Durchmesser zum Austrag der Schmelze. Die Granulierung der aus der Düsenplatte austretenden Schmelzestränge erfolgte mittels Heißabschlagsgranulierung, d.h. die Schmelzestränge wurden durch mit Wasser überströmte, rotierende Messer abgehackt.

In den erfindungsgemäßen Beispielen 4.1, 6, 10 und 12 zur Herstellung der erfindungsgemäßen Polycarbonatmasterbatches erfolgte die Dosierung des Titandioxidpulvers in Gehäuse 31 über den abgebildeten Einzugstrichter 29. Das Polycarbonat sowie die sonstigen Masterbatch-Bestandteile wurden dem kontinuierlichen Einwellenkneter in Gehäuse 30 über den Einzugstrichter 28 zugeführt.

Im Bereich des Gehäuses 30 befindet sich eine Förderzone bestehend aus Förderelementen für ein Polycarbonatgranulat und die sonstigen Masterbatch-Bestandteile.

Im Bereich des Gehäuses 31 befindet sich eine Plastifizierzone bestehend aus verschiedenen Misch- und Knetelementen. Am Ende der Plastifizierzone direkt vor der Entlüftungsöffnung 33 befindet sich ein Stauring mit einem Innendurchmesser von 43 mm. Weiterhin befindet sich am Ende von Gehäuse 31 eine Förderzone für Titandioxidpulver bestehend aus Förderelementen.

Im Bereich des Gehäuses 32 befinden sich eine Förderzone bestehend aus Förderelementen sowie zwei Mischzonen bestehend aus verschiedenen Misch- und Knetelementen; eine am Anfang und eine am Ende des Gehäuses. Weiterhin befindet sich in Gehäuse 32 zwischen den Mischzonen eine Entgasungszone welche aus Förderelementen besteht.

In Gehäuseteil 32 befindet sich die Entgasungsöffnung 34, welche an eine Absaugvorrichtung (nicht gezeigt) angeschlossen ist.

In dem erfindungsgemäßen Beispiel 4.2 zur Herstellung des erfindungsgemäßen Polycarbonatmasterbatchs erfolgte die Dosierung der Hälfte des enthaltenen Titandioxidpulvers über den Haupteinzug des kontinuierlichen Einwellenkneters in Gehäuse 30 über den abgebildeten Einzugstrichter 28 und die andere Hälfte des enthaltenen Titandioxidpulvers in Gehäuse 31 über den Einzugstrichter 29. Das Polycarbonat sowie die sonstigen Masterbatch-Bestandteile wurden dem kontinuierlichen Einwellenkneter in Gehäuse 30 über den Einzugstrichter 28 zugeführt.

Im Bereich des Gehäuses 30 befindet sich eine Förderzone bestehend aus Förderelementen für ein Polycarbonatgranulat, ein Titandioxidpulver sowie die sonstigen Masterbatchbestandteile.

Im Bereich des Gehäuses 31 befindet sich eine Plastifizierzone bestehend aus verschiedenen Misch- und Knetelementen. Am Ende der Plastifizierzone direkt vor der Entlüftungsöffnung 33 befindet sich ein Stauring mit einem Innendurchmesser von 43 mm. Weiterhin befindet sich am Ende von Gehäuse 31 eine Förderzone für Titandioxidpulver bestehend aus Förderelementen.

Im Bereich des Gehäuses 32 befinden sich eine Förderzone bestehend aus Förderelementen sowie zwei Mischzonen bestehend aus verschiedenen Misch- und Knetelementen; eine am Anfang und eine am Ende des Gehäuses. Weiterhin befindet sich in Gehäuse 32 zwischen den Mischzonen eine Entgasungszone welche aus Förderelementen besteht.

In Gehäuseteil 32 befindet sich die Entgasungsöffnung 34, welche an eine Absaugvorrichtung (nicht gezeigt) angeschlossen ist.

Für die Herstellung der erfindungsgemäßen Polycarbonatformmassen der Beispiele 4.1.1, 4.2.1, 6.1, 10.1 und 12.1 wurde ein Doppelschneckenextruder ZE60A UTXi der Firma KraussMaffei Berstorff GmbH verwendet. Der Doppelschneckenextruder besitzt einen Gehäuseinnendurchmesser von 65 mm und ein L/D-Verhältnis von 43. Den prinzipiellen Aufbau des verwendeten Extruders für die Beispiele 4.1.1, 4.2.1 und 6.1 zeigt Figur 1. Den prinzipiellen Aufbau des verwendeten Extruders für die Beispiele 10.1 und 12.1 zeigt Figur 1.1.

In den Beispielen 4.1.1, 4.2.1 und 6.1 erfolgte die Dosierung aller Bestandteile der Polycarbonatformmasse über den Haupteinzug in Gehäuse 2 über den abgebildeten Einzugstrichter 1.

Im Bereich der Gehäuse 2 bis 7 befindet sich eine Förderzone für ein Polycarbonatgranulat, einen Polycarbonatmasterbatch sowie die sonstigen Formmassen-Bestandteile.

Im Bereich des Gehäuses 8 befindet sich eine Plastifizierzone, welche aus verschiedenen zwei- und dreigängigen Knetblöcken verschiedener Breite sowie Zahnblöcken besteht.

Im Bereich der Gehäuse 9 bis 10 befindet sich eine Mischzone, welche aus Knetelementen, Zahnblöcken und Förderelementen besteht.

In Gehäuseteil 11 befindet sich die Entgasungsöffnung 13, welche an eine Absaugvorrichtung (nicht gezeigt) angeschlossen ist.

In Gehäuse 12 befindet sich die Druckaufbauzone und im Anschluss daran eine Düsenplatte mit 29 Löchern.

In den Beispielen 4.1.1, 4.2.1 und 6.1 wurden Polycarbonatgranulat, ein Polycarbonatmasterbatch erhalten aus dem erfindungsgemäßen Beispiel 4.1 für Beispiel 4.1.1, aus dem erfindungsgemäßen Beispiel 4.2 für Beispiel 4.2.1 bzw. aus dem erfindungsgemäßen Beispiel 6 für Beispiel 6.1 sowie die sonstigen Formmassen-Bestandteile mittels handelsüblicher gravimetrischer Differentialdosierwaagen in den Einzugstrichter 1 dosiert.

Die Granulierung erfolgte in den Beispielen 4.1.1, 4.2.1 und 6.1 als Stranggranulierung nach Wasserbadkühlung.

Die Messung der Schmelzetemperatur erfolgte in den Beispielen 4.1.1, 4.2.1 und 6.1 mittels Einstechen eines Thermoelements in die austretende Schmelze des mittleren Schmelzestrangs direkt vor der Düsenplatte.

In den Beispielen 10.1 und 12.1 erfolgte die Dosierung aller festen Bestandteile der Polycarbonatformmasse über den Haupteinzug in Gehäuse 15 über den abgebildeten Einzugstrichter 14. In Beispiel 10.1 wurde ein flüssiges Flammschutzmittel über die Einspritzdüse 27 in Gehäuseteil 21 in die geschmolzene Formmasse zugegeben.

Im Bereich der Gehäuse 15 bis 18 befindet sich eine Förderzone für ein Polycarbonatgranulat, einen Polycarbonatmasterbatch sowie die sonstigen festen Formmassen-Bestandteile.

Im Bereich des Gehäuses 19 befindet sich eine Plastifizierzone, welche aus verschiedenen zwei- und dreigängigen Knetblöcken verschiedener Breite sowie Zahnblöcken besteht.

Im Bereich der Gehäuse 21 bis 23 befindet sich eine Mischzone, welche aus Knetelementen, Zahnblöcken und Förderelementen besteht.

In Gehäuseteil 24 befindet sich die Entgasungsöffnung 26, welche an eine Absaugvorrichtung (nicht gezeigt) angeschlossen ist.

In Gehäuse 25 befindet sich die Druckaufbauzone und im Anschluss daran eine Düsenplatte mit 29 Löchern.

In den Beispielen 10.1 und 12.1 wurden Polycarbonatgranulat, ein Polycarbonatmasterbatch erhalten aus dem erfindungsgemäßen Beispiel 10 für Beispiel 10.1 bzw. aus dem erfindungsgemäßen Beispiel 12 für Beispiel 12.1 und die sonstigen Formmassen-Bestandteile mittels handelsüblicher gravimetrischer Differentialdosierwaagen in den Einzugstrichter 14 dosiert.

Die Granulierung erfolgte in den Beispielen 10.1 und 12.1 als Stranggranulierung nach Wasserbadkühlung.

Die Messung der Schmelzetemperatur erfolgte in den Beispielen 10.1 und 12.1 mittels Einstechen eines Thermoelements in die austretende Schmelze des mittleren Schmelzestrangs direkt vor der Düsenplatte.

Bei den erfindungsgemäßen Beispielen 8 / 8.1 wurde zunächst mit einem kontinuierlichen Einwellenkneter vom Typ Ko-Kneter Mx 58 der Fa. Buss AG ein Talkum enthaltender Polycarbonatmasterbatch hergestellt. Anschließend wurde aus diesem Polycarbonatmasterbatch, Polycarbonat und weiteren Formmassen-Bestandteilen mit einem Doppelschneckenextruder ZE60A UTXi der Firma KraussMaffei Berstorff GmbH eine Polycarbonatformmasse mit verbesserten Eigenschaften hergestellt.

Der für die Herstellung des Polycarbonatmasterbatches verwendete Ko-Kneter besitzt einen Gehäuseinnendurchmesser von 58,4 mm, einen Schneckenelemente-Außendurchmesser DA von 57,7 mm im Bereich von Lagerstellen, einen Schneckenelemente-Außendurchmesser DA von 56,3 mm im Bereich außerhalb der Lagerstellen, ein L/D-Verhältnis von 15, ein DA/DI-Verhältnis von 1,55 vom Anfang der Ko-Kneterwelle bis zum Stauring am Ende der Aufschmelzzone, ein DA/DI-Verhältnis von 1,71 ab dem Stauring bis zum Ender der Ko-Kneterwelle sowie ein DA/Hub-Verhältnis von 5,5. Die Gesamtlänge der Bereiche der Lagerstellen beträgt ca. 15 % der Gesamtlänge der Schneckenwelle des kontinuierlichen Einwellenkneters. Der Bereich vom Anfang der Ko-Kneterwelle bis zum Stauring beträgt 40% der Gesamtlänge der Ko-Kneterwelle.

Den prinzipiellen Aufbau des verwendeten kontinuierlichen Einwellenkneters zeigt Figur 2. Der kontinuierliche Einwellenkneter weist ein aus 3 Teilen bestehendes Gehäuse auf, in welchem eine sich drehende und gleichzeitig eine axiale Hin- und Herbewegung ausführende Schneckenwelle (nicht gezeigt) angeordnet ist.

Zum Austrag der Schmelze aus dem kontinuierlichen Einwellenkneter wird ein Einschneckenextruder (nicht in Figur 2 gezeigt) mit einem Gehäuseinnendurchmesser von 110 mm und einem L/D-Verhältnis von 6 verwendet. Der Einschneckenextruder ist direkt an den kontinuierlichen Einwellenkneter angeflanscht und dient lediglich dem Druckaufbau zur Granulierung der Polycarbonatmasterbatches. Eine signifikante Vermischung und/oder Zerkleinerung aller Masterbatch-Bestandteile erfolgt in dem Einschneckenextruder nicht. Am Ende des Einschneckenextruders befindet sich eine Düsenplatte mit einem Durchmesser von 118,5 mm zur Ausformung der Schmelzestränge. In der Düsenplatte befinden sich 66 Bohrungen mit jeweils 3 mm Durchmesser zum Austrag der Schmelze. Die Granulierung der aus der Düsenplatte austretenden Schmelzestränge erfolgte mittels Heißabschlagsgranulierung, d.h. die Schmelzestränge wurden durch mit Wasser überströmte, rotierende Messer abgehackt.

In dem erfindungsgemäßen Beispiel 8 zur Herstellung des Polycarbonatmasterbatches erfolgte die Dosierung des Polycarbonats, der sonstigen Masterbatch-Bestandteile sowie von 40% des Talkumpulvers in Gehäuse 30 über den abgebildeten Einzugstrichter 28. Die übrigen 60% des Talkumpulvers wurden dem kontinuierlichen Einwellenkneter in Gehäuse 31 über den Einzugstrichter 29 zugeführt.

Im Bereich des Gehäuses 30 befindet sich eine Förderzone bestehend aus Förderelementen für ein Polycarbonatgranulat, die sonstigen Masterbatch-Bestandteile und das Talkumpulver.

Im Bereich des Gehäuses 31 befindet sich eine Plastifizierzone bestehend aus verschiedenen Misch- und Knetelementen. Am Ende der Plastifizierzone direkt vor der Entlüftungsöffnung 33 befindet sich ein Stauring mit einem Innendurchmesser von 43 mm. Weiterhin befindet sich am Ende von Gehäuse 31 eine Förderzone für Talkumpulver bestehend aus Förderelementen.

Im Bereich des Gehäuses 32 befinden sich eine Förderzone bestehend aus Förderelementen sowie zwei Mischzonen bestehend aus verschiedenen Misch- und Knetelementen; eine am Anfang und eine am Ende des Gehäuses. Weiterhin befindet sich in Gehäuse 32 zwischen den Mischzonen eine Entgasungszone welche aus Förderelementen besteht.

In Gehäuseteil 32 befindet sich die Entgasungsöffnung 34, welche an eine Absaugvorrichtung (nicht gezeigt) angeschlossen ist.

Für die Herstellung der erfindungsgemäßen Polycarbonatformmasse des Beispiels 8.1 wurde ein Doppelschneckenextruder ZE60A UTXi der Firma KraussMaffei Berstorff GmbH verwendet. Der Doppelschneckenextruder besitzt einen Gehäuseinnendurchmesser von 65 mm und ein L/D-Verhältnis von 43. Den prinzipiellen Aufbau des verwendeten Extruders für Beispiel 8. zeigt Figur 1.2.

In Beispiel 8.1 erfolgte die Dosierung aller Bestandteile der Polycarbonatformmasse über den Haupteinzug in Gehäuse 36 über den abgebildeten Einzugstrichter 35.

Im Bereich der Gehäuse 36 bis 40 befindet sich eine Förderzone für ein Polycarbonatgranulat, einen Polycarbonatmasterbatch sowie die sonstigen Formmassen-Bestandteile.

Im Bereich des Gehäuses 41 befindet sich eine Plastifizierzone, welche aus verschiedenen zwei- und dreigängigen Knetblöcken verschiedener Breite sowie Zahnblöcken besteht.

Im Bereich der Gehäuse 43 und 44 befindet sich eine Mischzone, welche aus Knetelementen, Zahnblöcken und Förderelementen besteht.

In Gehäuseteil 45 befindet sich die Entgasungsöffnung 47, welche an eine Absaugvorrichtung (nicht gezeigt) angeschlossen ist.

In Gehäuse 46 befindet sich die Druckaufbauzone und im Anschluss daran eine Düsenplatte mit 29 Löchern.

In Beispiel 8.1 wurden Polycarbonatgranulat, ein Polycarbonatmasterbatch erhalten aus dem erfindungsgemäßen Beispiel 8 und die sonstigen Formmassen-Bestandteile mittels handelsüblicher gravimetrischer Differentialdosierwaagen in den Einzugstrichter 35 dosiert.

Die Granulierung erfolgte in Beispiel 8.1 als Stranggranulierung nach Wasserbadkühlung.

Die Messung der Schmelzetemperatur erfolgte in Beispiel 8.1 mittels Einstechen eines Thermoelements in die austretende Schmelze des mittleren Schmelzestrangs direkt vor der Düsenplatte.

Die in den Beispielen 1, 2.1.1, 3, 4.1.1, 4.2.1, 5, 6.1, 9, 10.1, 11, 12.1 und 14 hergestellten Polycarbonatformmassen wurden im Anschluss über ein Spritzgussverfahren auf einer Spritzgussmaschine des Typs FM160 von der Firma Klöckner zu Platten mit glänzender Oberfläche und Abmessungen von 150 mm x 105 mm x 3,2 mm (Länge x Breite x Dicke) verarbeitet.

Die Spritzgussmaschine besitzt einen Zylinderdurchmesser von 45 mm. Für die Herstellung der Platten wurde ein Spritzgusswerkzeug mit Glanzpolitur (ISO N1) verwendet. Die Polycarbonatformmassen wurden vor dem Spritzgießen bei 110 °C innerhalb von 4 Stunden vorgetrocknet. Die Spritzgussverarbeitung erfolgte unter den für Polycarbonate charakteristischen Bedingungen. Bei der Herstellung der Platten bei den Beispielen 1, 2.1.1, 5 und 6.1 lagen die Masse- oder Schmelzetemperaturen bei 280°C, die Werkzeugtemperatur bei 80°C, die Zykluszeit bei 43 sec und die Einspritzgeschwindigkeit bei 40 mm/sec. Bei der Herstellung der Platten bei den Beispielen 3, 4.1.1 und 4.2.1 lagen die Masse- oder Schmelzetemperaturen bei 300°C, die Werkzeugtemperatur bei 90°C, die Zykluszeit bei 43 sec und die Einspritzgeschwindigkeit bei 40 mm/sec. Bei der Herstellung der Platten bei den Beispielen 7 und 8.1 lagen die Masse- oder Schmelzetemperaturen bei 270°C, die Werkzeugtemperatur bei 70°C, die Zykluszeit bei 43 sec und die Einspritzgeschwindigkeit bei 40 mm/sec. Bei der Herstellung der Platten bei den Beispielen 9, 10.1, 11, 12.1 und 14 lagen die Masse- oder Schmelzetemperaturen bei 240°C, die Werkzeugtemperatur bei 80°C, die Zykluszeit bei 43 sec und die Einspritzgeschwindigkeit bei 40 mm/sec.

Auftretende Defekte auf den Oberflächen von so hergestellten Spritzgusskörpern wurden durch optische Analysenmethoden identifiziert und quantifiziert. Eine geeignete Messmethode zur quantitativen Erfassung der Oberflächendefekte ist die Betrachtung der Formteiloberflächen in einem Auflichtmikroskop - z.B. Zeiss Axioplan 2 motorisiert - durch ein Objektiv mit 2,5-facher Vergrößerung im Hellfeld, bei einer Beleuchtung mit einer Halogen-100-Lichtquelle. Dabei wurde ein Oberflächenbereich der Größe von 4 cm x 4 cm durch mäanderförmiges Scannen betrachtet und es wurden mit einer CCD-Kamera - z.B. Axiocam HRC - Fotos von dieser Oberfläche erzeugt.. Mit einer Bildauswertesoftware - z.B. KS 300 Zeiss - wurde bei den Fotos die Anzahl und Größe der Oberflächendefekte bestimmt. Alle Oberflächendefekte mit einer Größe von wenigstens 10 µm wurden für die Bestimmung der Anzahl der Oberflächendefekte herangezogen. Die in Tabelle 1 angegebenen Werte für die Anzahl Defekte je cm², den mittleren Defektdurchmesser sowie den maximalen Defektdurchmesser geben jeweils den arithmetischen Mittelwert der Messungen an 3 Spritzgussplatten an.

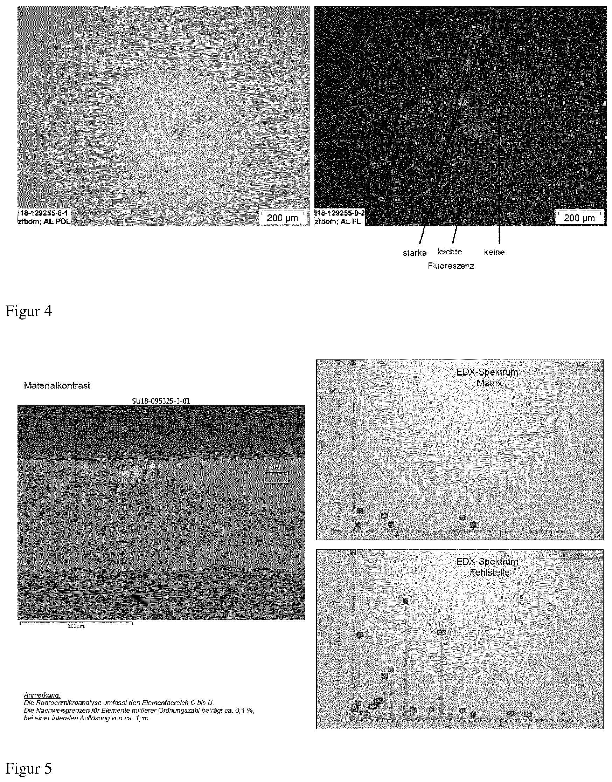

Die optisch so festgestellten Oberflächendefekte auf Formteilen aus Polymermischungen mit den oben genannten Zusammensetzungen werden insbesondere durch Agglomerate oder Aggregate von Titandioxidteilchen verursacht, die bei der Schmelzemischung der Komponenten im Extruder unzureichend zerteilt werden (siehe Figur 3 (EDX-Spektrum zu Messstelle 04-01A) enthaltend größere Anteile an Titandioxid). Folgende weitere Partikel, welche Oberflächendefekte auslösen können, können sich in der Mischung befinden: abgebautes PC (siehe Figur 4; erkennbar an der Fluoreszenz der Partikel), metallhaltige Partikel (siehe Figur 5 (EDX-Spektrum zu Messstelle 3-01B); erkennbar am enthaltenen Eisen). Die metallhaltigen Partikel können beispielsweise entstehen, wenn Polycarbonat, das am Innengehäuse des Extruders anhaftet, abplatzt und Metallpartikel des Extrudergehäuses mitreißt.

Ohne dass sich die Erfinder auf eine wissenschaftliche Theorie festlegen wollten, kann begründet angenommen werden, dass die Partikel von abgebautem Polycarbonat und die metallhaltigen Partikel durch den erhöhten Energieeintrag des Doppelschneckenextruders in die Polycarbonatformmasse, der nötig ist, um eine Dispergierung zu erreichen, die der Dispergierung der Polycarbonatformmasse mit einem kontinuierlichen Einwellenkneter zumindest angenähert ist, verursacht werden.

Die in den Beispielen 5 und 6.1 hergestellten Polycarbonatformmassen wurden im Anschluss zu Flachstäben mit einer Länge von 80 mm, einer Breite von 10 mm und einer Dicke von 3 mm spritzgegossen. An den Flachstäben wurde anschließend die Schlagzähigkeit der Polycarbonatformmasse im Schlagversuch nach DIN EN ISO 180 / 1A bei 23 °C bestimmt. Es wurden jeweils 10 Prüfkörper geprüft und aus diesen Ergebnissen der arithmetische Mittelwert bestimmt.

Die in den Beispielen 7 und 8.1 hergestellten Polycarbonatformmassen wurden im Anschluss zu Flachstäben mit einer Länge von 80 mm, einer Breite von 10 mm und einer Dicke von 4 mm spritzgegossen. An den Flachstäben wurde anschließend die Schlagzähigkeit der Polycarbonatformmasse im Schlagversuch nach DIN EN ISO 180 / 1U bei 23 °C, bei -20 °C und bei -30 °C bestimmt. Es wurden jeweils 10 Prüfkörper geprüft und aus diesen Ergebnissen der arithmetische Mittelwert bestimmt.

Die in den Beispielen 7 und 8.1 hergestellten Polycarbonatformmassen wurden im Anschluss zu Flachstäben mit einer Länge von 178 mm, einer Breite im schmalen Teil von 10 mm und einer Dicke von 4 mm spritzgegossen. An den Flachstäben wurde anschließend der E-Modul der Polycarbonatformmasse im Zugversuch nach DIN EN ISO 527-1,2 bei 23 °C bestimmt. Es wurden jeweils 10 Prüfkörper geprüft und aus diesen Ergebnissen der arithmetische Mittelwert bestimmt.

Die Formmasse, die in den Extruder zugeführt wird, besteht bei Beispiel 1 aus einer Mischung aus:
- 93 Gew.-% eines Granulats eines linearen Polycarbonats auf Basis von Bisphenol A mit einer relativen Viskosität ηᵣₑₗ = 1,255 (gemessen in CH₂Cl₂ als Lösungsmittel bei 25°C und bei einer Konzentration von 0,5 g/100 ml) und
- 0,1 Gew.-% eines maleinsäureanhydridgepropften Polyolefin-Copolymers (Typ A-C 907P der Firma Honeywell) und
- 6,99 Gew.-% einer Pulvermischung enthaltend 3 Gew.-% eines Titandioxidpulvers (Typ KRONOS 2230 der Fa. Kronos Titan), 3,1882 Gew.-% eines Polycarbonatpulvers eines linearen Polycarbonats auf Basis von Bisphenol A mit einer relativen Viskosität ηᵣₑₗ = 1,255 (gemessen in CH₂Cl₂ als Lösungsmittel bei 25°C und bei einer Konzentration von 0,5 g/100 ml) sowie 0,0018 Gew.-% weitere Farbmittel, 0,4 Gew.% Stabilisatoren und 0,4 Gew.-% Entformungsmittel.

Die Masterbatch-Zusammensetzung, die in den Ko-Kneter zugeführt wird, besteht bei den Beispielen 2.1, 4.1 und 6 aus einer Mischung aus:
- 58,7 Gew.-% eines Granulats eines linearen Polycarbonats auf Basis von Bisphenol A mit einer relativen Viskosität ηᵣₑₗ = 1,293 (gemessen in CH₂Cl₂ als Lösungsmittel bei 25°C und bei einer Konzentration von 0,5 g/100 ml) und
- 40 Gew.-% eines Titandioxidpulvers (Typ KRONOS 2230 der Fa. Kronos Titan) und
- 1,3 Gew.-% eines maleinsäureanhydridgepfropften Polyolefin-Copolymers (Typ A-C 907P der Firma Honeywell).

Die Masterbatch-Zusammensetzung, die in den Ko-Kneter zugeführt wird, besteht bei Beispiel 4.2 aus einer Mischung aus:
- 39 Gew.-% eines Granulats eines linearen Polycarbonats auf Basis von Bisphenol A mit einer relativen Viskosität ηᵣₑₗ = 1,318 (gemessen in CH₂Cl₂ als Lösungsmittel bei 25°C und bei einer Konzentration von 0,5 g/100 ml) und
- 60 Gew.-% eines Titandioxidpulvers (Typ KRONOS 2230 der Fa. Kronos Titan) und
- 1 Gew.-% eines maleinsäureanhydridgepfropften Polyolefin-Copolymers (Typ A-C 907P der Firma Honeywell).

Die Formmasse, die in den Extruder zugeführt wird, besteht bei Beispiel 2.1.1 aus einer Mischung aus:
- 88,4 Gew.-% eines Granulats eines linearen Polycarbonats auf Basis von Bisphenol A mit einer relativen Viskosität ηᵣₑₗ = 1,255 (gemessen in CH₂Cl₂ als Lösungsmittel bei 25°C und bei einer Konzentration von 0,5 g/100 ml) und
- 7,6 Gew.-% des in Beispiel 2.1 hergestellten Polycarbonatmasterbatchs und
- 4 Gew.-% einer Pulvermischung enthaltend 3,29 Gew.-% eines Polycarbonatpulvers eines linearen Polycarbonats auf Basis von Bisphenol A mit einer relativen Viskosität ηᵣₑₗ = 1,255 (gemessen in CH₂Cl₂ als Lösungsmittel bei 25°C und bei einer Konzentration von 0,5 g/100 ml) sowie 0,31 Gew.% Stabilisatoren und 0,4 Gew.-% Entformungsmittel.

Die Formmasse, die in den Extruder zugeführt wird, besteht bei Beispiel 3 aus einer Mischung aus:
- 81 Gew.-% eines Granulats eines linearen Polycarbonats auf Basis von Bisphenol A mit einer relativen Viskosität ηᵣₑₗ = 1,318 (gemessen in CH₂Cl₂ als Lösungsmittel bei 25°C und bei einer Konzentration von 0,5 g/100 ml) und
- 14 Gew.-% eines Titandioxidpulvers (Typ KRONOS 2230 der Fa. Kronos Titan) und
- 5 Gew.-% einer Pulvermischung enthaltend 3,51 Gew.-% eines Polycarbonatpulvers eines linearen Polycarbonats auf Basis von Bisphenol A mit einer relativen Viskosität ηᵣₑₗ = 1,318 (gemessen in CH₂Cl₂ als Lösungsmittel bei 25°C und bei einer Konzentration von 0,5 g/100 ml) sowie 1 Gew.-% eines Titandioxidpulvers (Typ KRONOS 2230 der Fa. Kronos Titan) und 0,49 Gew.-% eines maleinsäureanhydridgepfropften Polyolefin-Copolymers (Typ A-C 907P der Firma Honeywell).

Die Formmasse, die in den Extruder zugeführt wird, besteht bei Beispiel 4.1.1 aus einer Mischung aus:
- 62,2 Gew.-% eines Granulats eines linearen Polycarbonats auf Basis von Bisphenol A mit einer relativen Viskosität ηᵣₑₗ = 1,318 (gemessen in CH₂Cl₂ als Lösungsmittel bei 25°C und bei einer Konzentration von 0,5 g/100 ml) und
- 37,8 Gew.-% des in Beispiel 4.1 hergestellten Polycarbonatmasterbatchs.

Die Formmasse, die in den Extruder zugeführt wird, besteht bei Beispiel 4.2.1 aus einer Mischung aus:
- 74,3 Gew.-% eines Granulats eines linearen Polycarbonats auf Basis von Bisphenol A mit einer relativen Viskosität ηᵣₑₗ = 1,318 (gemessen in CH₂Cl₂ als Lösungsmittel bei 25°C und bei einer Konzentration von 0,5 g/100 ml) und
- 25,7 Gew.-% des in Beispiel 4.2 hergestellten Polycarbonatmasterbatchs.

Die Formmasse, die in den Extruder zugeführt wird, besteht bei Beispiel 5 aus einer Mischung aus:
- 89 Gew.-% eines Granulats eines linearen Polycarbonats auf Basis von Bisphenol A mit einer relativen Viskosität ηᵣₑₗ = 1,255 (gemessen in CH₂Cl₂ als Lösungsmittel bei 25°C und bei einer Konzentration von 0,5 g/100 ml) und
- 6 Gew.-% eines Titandioxidpulvers (Typ KRONOS 2230 der Fa. Kronos Titan) und
- 5,02 Gew.-% einer Pulvermischung enthaltend 3,265 Gew.-% eines Polycarbonatpulvers eines linearen Polycarbonats auf Basis von Bisphenol A mit einer relativen Viskosität ηᵣₑₗ = 1,255 (gemessen in CH₂Cl₂ als Lösungsmittel bei 25°C und bei einer Konzentration von 0,5 g/100 ml) sowie 0,75 Gew.-% eines Titandioxidpulvers (Typ KRONOS 2230 der Fa. Kronos Titan), 0,22 Gew.-% eines maleinsäureanhydridgepfropften Polyolefin-Copolymers (Typ A-C 907P der Firma Honeywell), 0,02 Gew.-% weitere Farbmittel, 0,365 Gew.% Stabilisatoren und 0,4 Gew.-% Entformungsmittel.

Die Formmasse, die in den Extruder zugeführt wird, besteht bei Beispiel 6.1 aus einer Mischung aus:
- 78,9 Gew.-% eines Granulats eines linearen Polycarbonats auf Basis von Bisphenol A mit einer relativen Viskosität ηᵣₑₗ = 1,255 (gemessen in CH₂Cl₂ als Lösungsmittel bei 25°C und bei einer Konzentration von 0,5 g/100 ml) und
- 17,1 Gew.-% des in Beispiel 6 hergestellten Polycarbonatmasterbatchs und
- 4,02 Gew.-% einer Pulvermischung enthaltend 3,235 Gew.-% eines Polycarbonatpulvers eines linearen Polycarbonats auf Basis von Bisphenol A mit einer relativen Viskosität ηᵣₑₗ = 1,255 (gemessen in CH₂Cl₂ als Lösungsmittel bei 25°C und bei einer Konzentration von 0,5 g/100 ml) sowie 0,02 Gew.-% weitere Farbmittel, 0,365 Gew.% Stabilisatoren und 0,4 Gew.-% Entformungsmittel.

Die Formmasse, die in den Extruder zugeführt wird, besteht bei Beispiel 7 aus einer Mischung aus:
- 56 Gew.-% eines Granulats eines linearen Polycarbonats auf Basis von Bisphenol A mit einer relativen Viskosität ηᵣₑₗ = 1,255 (gemessen in CH₂Cl₂ als Lösungsmittel bei 25°C und bei einer Konzentration von 0,5 g/100 ml) und
- 22,95 Gew.-% eines Granulats eines Polyethylenterephthalats (Typ V004 der Fa. Invista Resins & Fibers) und
- 1,05 Gew.-% eines maleinsäureanhydridgepfropften Polyolefin-Copolymers (Typ A-C 907P der Firma Honeywell) und
- 15 Gew.-% eines Talkumpulvers (Typ Jetfine 3CA der Fa. Imerys) und
- 5 Gew.-% einer Pulvermischung enthaltend 3,635 Gew.-% eines Polycarbonatpulvers eines linearen Polycarbonats auf Basis von Bisphenol A mit einer relativen Viskosität ηᵣₑₗ = 1,255 (gemessen in CH₂Cl₂ als Lösungsmittel bei 25°C und bei einer Konzentration von 0,5 g/100 ml) sowie 0,45 Gew.-% Farbmittel, 0,315 Gew.% Stabilisatoren und 0,6 Gew.-% Entformungsmittel.

Die Masterbatch-Zusammensetzung, die in den Ko-Kneter zugeführt wird, besteht bei Beispiel 8 aus einer Mischung aus:
- 46,5 Gew.-% eines Granulats eines linearen Polycarbonats auf Basis von Bisphenol A mit einer relativen Viskosität ηᵣₑₗ = 1,28 (gemessen in CH₂Cl₂ als Lösungsmittel bei 25°C und bei einer Konzentration von 0,5 g/100 ml) und
- 50 Gew.-% eines Talkumpulvers (Typ Jetfine 3CA der Fa. Imerys) und
- 3,5 Gew.-% eines maleinsäureanhydridgepfropften Polyolefin-Copolymers (Typ A-C 907P der Firma Honeywell).

Die Formmasse, die in den Extruder zugeführt wird, besteht bei Beispiel 8.1 aus einer Mischung aus:
- 42,05 Gew.-% eines Granulats eines linearen Polycarbonats auf Basis von Bisphenol A mit einer relativen Viskosität ηᵣₑₗ = 1,255 (gemessen in CH₂Cl₂ als Lösungsmittel bei 25°C und bei einer Konzentration von 0,5 g/100 ml) und
- 22,95 Gew.-% eines Granulats eines Polyethylenterephthalats (Typ V004 der Fa. Invista Resins & Fibers GmbH)
- 30 Gew.-% des in Beispiel 8 hergestellten Polycarbonatmasterbatchs und
- 5 Gew.-% einer Pulvermischung enthaltend 3,635 Gew.-% eines Polycarbonatpulvers eines linearen Polycarbonats auf Basis von Bisphenol A mit einer relativen Viskosität ηᵣₑₗ = 1,255 (gemessen in CH₂Cl₂ als Lösungsmittel bei 25°C und bei einer Konzentration von 0,5 g/100 ml) sowie 0,45 Gew.-% Farbmittel, 0,315 Gew.% Stabilisatoren und 0,6 Gew.-% Entformungsmittel.

Die Formmasse, die in den Extruder zugeführt wird, besteht bei Beispiel 9 aus einer Mischung aus:
- 70 Gew.-% eines Granulats eines linearen Polycarbonats auf Basis von Bisphenol A mit einer relativen Viskosität ηᵣₑₗ = 1,28 (gemessen in CH₂Cl₂ als Lösungsmittel bei 25°C und bei einer Konzentration von 0,5 g/100 ml) und
- 4,6 Gew.-% eines Granulates eines Styrol-Acrylnitril-Copolymers (Typ: LUSTRAN SAN DN50 der Fa. Ineos) und
- 7,4% eines Pulvers eines Acrylnitril-Butadien-Styrol-Pfropfcopolymers (Typ: Novodor P60 der Fa. Ineos) und
- 10 Gew.-% eines flüssigen Flammschutzmittels (Typ: ADK Stab FP-600 der Fa. Adeka) und
- 8 Gew.-% einer Pulvermischung enthaltend 2,95303 Gew.-% eines Polycarbonatpulvers eines linearen Polycarbonats auf Basis von Bisphenol A mit einer relativen Viskosität ηᵣₑₗ = 1,255 (gemessen in CH₂Cl₂ als Lösungsmittel bei 25°C und bei einer Konzentration von 0,5 g/100 ml) sowie 3,33 Gew.-% eines Titandioxidpulvers (Typ KRONOS 2233 der Fa. Kronos Titan), 0,11 Gew.-% eines maleinsäureanhydridgepfropften Polyolefin-Copolymers (Typ A-C 907P der Firma Honeywell), 0,00697 Gew.-% weitere Farbmittel, 0,4 Gew.-% Stabilisatoren, 0,8 Gew.-% eines weiteren Flammschutzmittels und 0,4 Gew.-% Entformungsmittel.

Die Masterbatch-Zusammensetzung, die in den Ko-Kneter zugeführt wird, besteht bei den Beispielen 10 und 12 aus einer Mischung aus:
- 58,7 Gew.-% eines Granulats eines linearen Polycarbonats auf Basis von Bisphenol A mit einer relativen Viskosität ηᵣₑₗ = 1,28 (gemessen in CH₂Cl₂ als Lösungsmittel bei 25°C und bei einer Konzentration von 0,5 g/100 ml) und
- 40 Gew.-% eines Titandioxidpulvers (Typ KRONOS 2233 der Fa. Kronos Titan) und
- 1,3 Gew.-% eines maleinsäureanhydridgepfropften Polyolefin-Copolymers (Typ A-C 907P der Firma Honeywell).

Die Formmasse, die in den Extruder zugeführt wird, besteht bei Beispiel 10.1 aus einer Mischung aus:
- 64.6 Gew.-% eines Granulats eines linearen Polycarbonats auf Basis von Bisphenol A mit einer relativen Viskosität ηᵣₑₗ = 1,28 (gemessen in CH₂Cl₂ als Lösungsmittel bei 25°C und bei einer Konzentration von 0,5 g/100 ml) und
- 4,6 Gew.-% eines Granulates eines Styrol-Acrylnitril-Copolymers (Typ: LUSTRAN SAN DN50 der Fa. Ineos) und
- 7,4 Gew.-% eines Pulvers eines Acrylnitril-Butadien-Styrol-Pfropfcopolymers (Typ: Novodor P60 der Fa. Ineos) und
- 10 Gew.-% eines flüssigen Flammschutzmittels (Typ: ADK Stab FP-600 der Fa. Adeka) und
- 8,4 Gew.-% des in Beispiel 10 hergestellten Polycarbonatmasterbatchs und
- 5 Gew.-% einer Pulvermischung enthaltend 3,39303 Gew.-% eines Polycarbonatpulvers eines linearen Polycarbonats auf Basis von Bisphenol A mit einer relativen Viskosität ηᵣₑₗ = 1,255 (gemessen in CH₂Cl₂ als Lösungsmittel bei 25°C und bei einer Konzentration von 0,5 g/100 ml) sowie 0,00697 Gew.-% weitere Farbmittel, 0,4 Gew.-% Stabilisatoren, 0,8 Gew.-% eines weiteren Flammschutzmittels und 0,4 Gew.-% Entformungsmittel.

Die Formmasse, die in den Extruder zugeführt wird, besteht bei Beispiel 11 aus einer Mischung aus:
- 59 Gew.-% eines Granulats eines linearen Polycarbonats auf Basis von Bisphenol A mit einer relativen Viskosität ηᵣₑₗ = 1,255 (gemessen in CH₂Cl₂ als Lösungsmittel bei 25°C und bei einer Konzentration von 0,5 g/100 ml) und
- 2,85 Gew.-% eines Granulates eines Styrol-Acrylnitril-Copolymers (Typ: LUSTRAN SAN DN50 der Fa. Ineos) und
- 2,85 Gew.-% eines Pulvers eines Acrylnitril-Butadien-Styrol-Pfropfcopolymers (Typ: Novodor P60 der Fa. Ineos) und
- 14,39 Gew.-% eines Granulates eines Acrylnitril-Butadien-Styrol-Pfropfcopolymers (Typ: Terluran HI-10 der Fa. Ineos) und
- 3,76 Gew.-% eines Granulates eines Acrylnitril-Butadien-Styrol-Pfropfcopolymers (Typ: Magnum 8391 der Fa. Trinseo) und
- 14 Gew.-% eines Titandioxidpulvers (Typ KRONOS 2233 der Fa. Kronos Titan) und
- 3,15 Gew.-% einer Pulvermischung enthaltend 0,61312 Gew.-% eines Polycarbonatpulvers eines linearen Polycarbonats auf Basis von Bisphenol A mit einer relativen Viskosität ηᵣₑₗ = 1,255 (gemessen in CH₂Cl₂ als Lösungsmittel bei 25°C und bei einer Konzentration von 0,5 g/100 ml) sowie 1,002535 Gew.-% eines Titandioxidpulvers (Typ KRONOS 2233 der Fa. Kronos Titan), 0,493 Gew.-% eines maleinsäureanhydridgepfropften Polyolefin-Copolymers (Typ A-C 907P der Firma Honeywell), 0,001345 Gew.-% weitere Farbmittel, 0,3 Gew.-% Stabilisatoren und 0,74 Gew.-% Entformungsmittel.

Die Formmasse, die in den Extruder zugeführt wird, besteht bei Beispiel 12.1 aus einer Mischung aus:
- 36,10253 Gew.-% eines Granulats eines linearen Polycarbonats auf Basis von Bisphenol A mit einer relativen Viskosität ηᵣₑₗ = 1,255 (gemessen in CH₂Cl₂ als Lösungsmittel bei 25°C und bei einer Konzentration von 0,5 g/100 ml) und
- 2,85 Gew.-% eines Granulates eines Styrol-Acrylnitril-Copolymers (Typ: LUSTRAN SAN DN50 der Fa. Ineos) und
- 2,85 Gew.-% eines Pulvers eines Acrylnitril-Butadien-Styrol-Pfropfcopolymers (Typ: Novodor P60 der Fa. Ineos) und
- 14,39 Gew.-% eines Granulates eines Acrylnitril-Butadien-Styrol-Pfropfcopolymers (Typ: Terluran HI-10 der Fa. Ineos) und
- 3,76 Gew.-% eines Granulates eines Acrylnitril-Butadien-Styrol-Pfropfcopolymers (Typ: Magnum 8391 der Fa. Trinseo) und
- 37,9 Gew.-% des in Beispiel 12 hergestellten Polycarbonatmasterbatchs und
- 2,147465 Gew.-% einer Pulvermischung enthaltend 1,10612 Gew.-% eines Polycarbonatpulvers eines linearen Polycarbonats auf Basis von Bisphenol A mit einer relativen Viskosität ηᵣₑₗ = 1,255 (gemessen in CH₂Cl₂ als Lösungsmittel bei 25°C und bei einer Konzentration von 0,5 g/100 ml) sowie 0,001345 Gew.-% weitere Farbmittel, 0,3 Gew.-% Stabilisatoren und 0,74 Gew.-% Entformungsmittel.

Die Masterbatch-Zusammensetzung, die in den Ko-Kneter zugeführt wird, besteht bei Beispiel 13 aus einer Mischung aus:
- 58,7 Gew.-% eines Granulats eines linearen Polycarbonats auf Basis von Bisphenol A mit einer relativen Viskosität ηᵣₑₗ = 1,28 (gemessen in CH₂Cl₂ als Lösungsmittel bei 25°C und bei einer Konzentration von 0,5 g/100 ml) und
- 40 Gew.-% eines Titandioxidpulvers (Typ KRONOS 2233 der Fa. Kronos Titan) und
- 1,3 Gew.-% eines maleinsäureanhydridgepfropften Polyolefin-Copolymers (Typ A-C 907P der Firma Honeywell).

Die Formmasse, die in den Extruder zugeführt wird, besteht bei Beispiel 14 aus einer Mischung aus:
- 36,10253 Gew.-% eines Granulats eines linearen Polycarbonats auf Basis von Bisphenol A mit einer relativen Viskosität ηᵣₑₗ = 1,255 (gemessen in CH₂Cl₂ als Lösungsmittel bei 25°C und bei einer Konzentration von 0,5 g/100 ml) und
- 2,85 Gew.-% eines Granulates eines Styrol-Acrylnitril-Copolymers (Typ: LUSTRAN SAN DN50 der Fa. Ineos) und
- 2,85 Gew.-% eines Pulvers eines Acrylnitril-Butadien-Styrol-Pfropfcopolymers (Typ: Novodor P60 der Fa. Ineos) und
- 14,39 Gew.-% eines Granulates eines Acrylnitril-Butadien-Styrol-Pfropfcopolymers (Typ: Terluran HI-10 der Fa. Ineos) und
- 3,76 Gew.-% eines Granulates eines Acrylnitril-Butadien-Styrol-Pfropfcopolymers (Typ: Magnum 8391 der Fa. Trinseo) und
- 37,9 Gew.-% des in Beispiel 13 hergestellten Polycarbonatmasterbatchs und
- 2,147465 Gew.-% einer Pulvermischung enthaltend 1,10612 Gew.-% eines Polycarbonatpulvers eines linearen Polycarbonats auf Basis von Bisphenol A mit einer relativen Viskosität ηᵣₑₗ = 1,255 (gemessen in CH₂Cl₂ als Lösungsmittel bei 25°C und bei einer Konzentration von 0,5 g/100 ml) sowie 0,001345 Gew.-% weitere Farbmittel, 0,3 Gew.-% Stabilisatoren und 0,74 Gew.-% Entformungsmittel.

### Vergleichsbeispiel 1

In Vergleichsbeispiel 1 wird die Formmassenzusammensetzung enthaltend 3 Gew.-% Titandioxid bei einem Durchsatz von 2100 kg/h, einer Schneckenwellendrehzahl von 600 1/min und einem resultierenden spezifischen mechanischen Energieeintrag von 0,174 kWh/kg compoundiert. Die Temperatur der aus der Düsenplatte austretenden Schmelze beträgt 354 °C.

Die Oberflächen dreier aus der compoundierten Formmasse spritzgegossenen Platten weisen im Mittel 88 Defekte pro cm², einen mittleren Defektdurchmesser von 20,1 µm und einen maximalen Defektdurchmesser von 104,8 µm auf.

### Beispiel 2.1 (erfindungsgemäß - Polycarbonatmasterbatch)

Im erfindungsgemäßen Beispiel 2.1 wird die Polycarbonatmasterbatch-Zusammensetzung enthaltend 40 Gew.-% Titandioxid bei einem Durchsatz von 120 kg/h, einer Drehzahl von 200 1/min und einem resultierenden spezifischen mechanischen Energieeintrag von 0,067 kWh/kg compoundiert. Die Temperatur der aus der Düsenplatte austretenden Schmelze beträgt 275 °C.

### Beispiel 2.1.1 (erfindungsgemäß - Polycarbonatformmasse)

Im erfindungsgemäßen Beispiel 2.1.1 wird die Formmassenzusammensetzung enthaltend 3 Gew.-% Titandioxid, eingebracht mittels des gemäß Beispiel 2.1 hergestellten Polycarbonatmasterbatchs, bei einem Durchsatz von 3000 kg/h, einer Schneckenwellendrehzahl von 500 1/min und einem resultierenden spezifischen mechanischen Energieeintrag von 0,142 kWh/kg compoundiert. Die Temperatur der aus dem Extruder austretenden Schmelze beträgt 327 °C.

Die Oberflächen dreier aus der compoundierten Formmasse spritzgegossenen Platten weisen im Mittel 79 Defekte pro cm², einen mittleren Defektdurchmesser von 20,1 µm und einen maximalen Defektdurchmesser von 66,5 µm auf.

Im Vergleich zum Vergleichsbeispiel 1 konnte somit unter Verwendung des erfindungsgemäßen Polycarbonatmasterbatchs eine Formmasse mit verbesserten Eigenschaften hergestellt werden bei 43% höherem Durchsatz und 27 °C niedrigerer Schmelzetemperatur.

### Vergleichsbeispiel 3

In Vergleichsbeispiel 3 wird die Formmassenzusammensetzung enthaltend 15 Gew.-% Titandioxid bei einem Durchsatz von 690 kg/h, einer Schneckenwellendrehzahl von 260 1/min und einem resultierenden spezifischen mechanischen Energieeintrag von 0,131 kWh/kg compoundiert. Die Temperatur der aus der Düsenplatte austretenden Schmelze beträgt 326 °C.

Die Oberflächen dreier aus der compoundierten Formmasse spritzgegossenen Platten weisen im Mittel 2948 Defekte pro cm², einen mittleren Defektdurchmesser von 40,8 µm und einen maximalen Defektdurchmesser von 206,2 µm auf.

### Beispiel 4.1 (erfindungsgemäß - Polycarbonatmasterbatch)

Im erfindungsgemäßen Beispiel 4.1 wird die Polycarbonatmasterbatch-Zusammensetzung enthaltend 40 Gew.-% Titandioxid bei einem Durchsatz von 120 kg/h, einer Drehzahl von 200 1/min und einem resultierenden spezifischen mechanischen Energieeintrag von 0,067 kWh/kg compoundiert. Die Temperatur der aus der Düsenplatte austretenden Schmelze beträgt 275 °C.

### Beispiel 4.1.1 (erfindungsgemäß - Polycarbonatformmasse)

Im erfindungsgemäßen Beispiel 4.1.1 wird die Formmassenzusammensetzung enthaltend 15 Gew.-% Titandioxid, eingebracht mittels des gemäß Beispiel 4.1 hergestellten Polycarbonatmasterbatchs, bei einem Durchsatz von 690 kg/h, einer Schneckenwellendrehzahl von 260 1/min und einem resultierenden spezifischen mechanischen Energieeintrag von 0,139 kWh/kg compoundiert. Die Temperatur der aus dem Extruder austretenden Schmelze beträgt 329 °C.

Die Oberflächen dreier aus der compoundierten Formmasse spritzgegossenen Platten weisen im Mittel 78 Defekte pro cm², einen mittleren Defektdurchmesser von 16,2 µm und einen maximalen Defektdurchmesser von 125 µm auf.

Im Vergleich zum Vergleichsbeispiel 3 konnte somit unter Verwendung des erfindungsgemäßen Polycarbonatmasterbatchs eine Formmasse mit verbesserten Eigenschaften hergestellt werden bei gleichbleibendem Durchsatz und ohne Erhöhung des Energieeintrags.

### Beispiel 4.2 (erfindungsgemäß - Polycarbonatmasterbatch)

Im erfindungsgemäßen Beispiel 4.2 wird die Polycarbonatmasterbatch-Zusammensetzung enthaltend 60 Gew.-% Titandioxid bei einem Durchsatz von 100 kg/h, einer Drehzahl von 300 1/min und einem resultierenden spezifischen mechanischen Energieeintrag von 0,087 kWh/kg compoundiert. Die Temperatur der aus der Düsenplatte austretenden Schmelze beträgt 293 °C.

### Beispiel 4.2.1 (erfindungsgemäß - Polycarbonatformmasse)

Im erfindungsgemäßen Beispiel 4.2.1 wird die Formmassenzusammensetzung enthaltend 15 Gew.-% Titandioxid, eingebracht mittels des gemäß Beispiel 4.2 hergestellten Polycarbonatmasterbatchs, bei einem Durchsatz von 690 kg/h, einer Schneckenwellendrehzahl von 275 1/min und einem resultierenden spezifischen mechanischen Energieeintrag von 0,138 kWh/kg compoundiert. Die Temperatur der aus dem Extruder austretenden Schmelze beträgt 332 °C.

Die Oberflächen dreier aus der compoundierten Formmasse spritzgegossenen Platten weisen im Mittel 78 Defekte pro cm², einen mittleren Defektdurchmesser von 16,2 µm und einen maximalen Defektdurchmesser von 125 µm auf.

Im Vergleich zum Vergleichsbeispiel 3 konnte somit unter Verwendung des erfindungsgemäßen Polycarbonatmasterbatchs eine Formmasse mit verbesserten Eigenschaften hergestellt werden bei gleichbleibendem Durchsatz und ohne Erhöhung des Energieeintrags.

### Vergleichsbeispiel 5

In Vergleichsbeispiel 5 wird die Formmassenzusammensetzung enthaltend 6,75 Gew.-% Titandioxid bei einem Durchsatz von 720 kg/h, einer Schneckenwellendrehzahl von 270 1/min und einem resultierenden spezifischen mechanischen Energieeintrag von 0,132 kWh/kg compoundiert. Die Temperatur der aus der Düsenplatte austretenden Schmelze beträgt 297 °C.

Die Oberflächen dreier aus der compoundierten Formmasse spritzgegossenen Platten weisen im Mittel 128 Defekte pro cm², einen mittleren Defektdurchmesser von 32,3 µm und einen maximalen Defektdurchmesser von 176,3 µm auf.

Aus der compoundierten Formmasse spritzgegossene Stäbe weisen eine Kerbschlagzähigkeit von 15 kJ/m² bei 23 °C und von 11 kJ/m² bei -20 °C auf.

### Beispiel 6 (erfindungsgemäß - Polycarbonatmasterbatch)

Im erfindungsgemäßen Beispiel 6 wird die Polycarbonatmasterbatch-Zusammensetzung enthaltend 40 Gew.-% Titandioxid bei einem Durchsatz von 120 kg/h, einer Drehzahl von 200 1/min und einem resultierenden spezifischen mechanischen Energieeintrag von 0,067 kWh/kg compoundiert. Die Temperatur der aus der Düsenplatte austretenden Schmelze beträgt 275 °C.

### Beispiel 6.1 (erfindungsgemäß - Polycarbonatformmasse)

Im erfindungsgemäßen Beispiel 6.1 wird die Formmassenzusammensetzung enthaltend 6,75 Gew.-% Titandioxid, eingebracht mittels des gemäß Beispiel 6 hergestellten Polycarbonatmasterbatchs, bei einem Durchsatz von 720 kg/h, einer Schneckenwellendrehzahl von 270 1/min und einem resultierenden spezifischen mechanischen Energieeintrag von 0,138 kWh/kg compoundiert. Die Temperatur der aus dem Extruder austretenden Schmelze beträgt 299 °C.

Die Oberflächen dreier aus der compoundierten Formmasse spritzgegossenen Platten weisen im Mittel 67 Defekte pro cm², einen mittleren Defektdurchmesser von 20,5 µm und einen maximalen Defektdurchmesser von 116,3 µm auf.

Aus der compoundierten Formmasse spritzgegossene Stäbe weisen eine Kerbschlagzähigkeit von 37,6 kJ/m² bei 23 °C auf.

Im Vergleich zum Vergleichsbeispiel 5 konnte somit unter Verwendung des erfindungsgemäßen Polycarbonatmasterbatchs eine Formmasse mit verbesserten Oberflächen- und mechanischen Eigenschaften hergestellt werden bei gleichbleibendem Durchsatz und ohne Erhöhung des Energieeintrags.

Die Prozessparameter und Formmasseneigenschaften der Vergleichs- und erfindungsgemäßen Versuche 1-15 sind in der Tabelle 1 zusammengefasst.

### Vergleichsbeispiel 7

In Vergleichsbeispiel 7 wird die Formmassenzusammensetzung enthaltend 15 Gew.-% Talkum bei einem Durchsatz von 600 kg/h, einer Schneckenwellendrehzahl von 475 1/min und einem resultierenden spezifischen mechanischen Energieeintrag von 0,145 kWh/kg compoundiert. Die Temperatur der aus der Düsenplatte austretenden Schmelze beträgt 319 °C.

Aus der compoundierten Formmasse spritzgegossene Stäbe weisen eine Kerbschlagzähigkeit von 74 kJ/m² bei 23 °C, von 75 kJ/m² bei -20 °C und von 68 kJ/m² bei -30 °C auf.

Der im Zugversuch bei 23 °C ermittelte E-Modul beträgt 4243 MPa.

### Beispiel 8 (erfindungsgemäß - Polycarbonatmasterbatch)

Im erfindungsgemäßen Beispiel 8 wird die Polycarbonatmasterbatch-Zusammensetzung enthaltend 50 Gew.-% Talkum bei einem Durchsatz von 100 kg/h, einer Drehzahl von 300 1/min und einem resultierenden spezifischen mechanischen Energieeintrag von 0,105 kWh/kg compoundiert. Die Temperatur der aus der Düsenplatte austretenden Schmelze beträgt 264 °C.

### Beispiel 8.1 (erfindungsgemäß - Polycarbonatformmasse)

Im erfindungsgemäßen Beispiel 8.1 wird die Formmassenzusammensetzung enthaltend 15 Gew.-% Talkum, eingebracht mittels des gemäß Beispiel 8 hergestellten Polycarbonatmasterbatchs, bei einem Durchsatz von 600 kg/h, einer Schneckenwellendrehzahl von 275 1/min und einem resultierenden spezifischen mechanischen Energieeintrag von 0,127 kWh/kg compoundiert. Die Temperatur der aus dem Extruder austretenden Schmelze beträgt 290 °C.

Aus der compoundierten Formmasse spritzgegossene Stäbe weisen eine Kerbschlagzähigkeit von 79 kJ/m² bei 23 °C, 80 kJ/m² bei -20 °C und 78 kJ/m² bei -30 °C auf.

Der im Zugversuch bei 23 °C ermittelte E-Modul beträgt 4394 MPa.

Im Vergleich zum Vergleichsbeispiel 7 konnte somit unter Verwendung des erfindungsgemäßen Polycarbonatmasterbatchs eine Formmasse mit verbesserter Kerbschlagzähigkeit zwischen -30 °C und 23 °C und verbesserter Steifigkeit bei 23 °C hergestellt werden bei gleichbleibendem Durchsatz und gleichzeitig niedrigerem Energieeintrag und Schmelzetemperatur.

### Vergleichsbeispiel 9

In Vergleichsbeispiel 9 wird die Formmassenzusammensetzung enthaltend 3,3 Gew.-% Titandioxid bei einem Durchsatz von 690 kg/h, einer Schneckenwellendrehzahl von 240 1/min und einem resultierenden spezifischen mechanischen Energieeintrag von 0,123 kWh/kg compoundiert. Die Temperatur der aus der Düsenplatte austretenden Schmelze beträgt 285 °C.

Die Oberflächen dreier aus der compoundierten Formmasse spritzgegossenen Platten weisen im Mittel 49,1 Defekte pro cm², einen mittleren Defektdurchmesser von 22,9 µm und einen maximalen Defektdurchmesser von 216,9 µm auf.

### Beispiel 10 (erfindungsgemäß - Polycarbonatmasterbatch)

Im erfindungsgemäßen Beispiel 10 wird die Polycarbonatmasterbatch-Zusammensetzung enthaltend 40 Gew.-% Titandioxid bei einem Durchsatz von 120 kg/h, einer Drehzahl von 200 1/min und einem resultierenden spezifischen mechanischen Energieeintrag von 0,067 kWh/kg compoundiert. Die Temperatur der aus der Düsenplatte austretenden Schmelze beträgt 265 °C.

### Beispiel 10.1 (erfindungsgemäß - Polycarbonatformmasse)

Im erfindungsgemäßen Beispiel 10.1 wird die Formmassenzusammensetzung enthaltend 3,36 Gew.-% Titandioxid, eingebracht mittels des gemäß Beispiel 10 hergestellten Polycarbonatmasterbatchs, bei einem Durchsatz von 690 kg/h, einer Schneckenwellendrehzahl von 250 1/min und einem resultierenden spezifischen mechanischen Energieeintrag von 0,126 kWh/kg compoundiert. Die Temperatur der aus dem Extruder austretenden Schmelze beträgt 287 °C.

Die Oberflächen dreier aus der compoundierten Formmasse spritzgegossenen Platten weisen im Mittel 19,1 Defekte pro cm², einen mittleren Defektdurchmesser von 22,4 µm und einen maximalen Defektdurchmesser von 75,6 µm auf.

Im Vergleich zum Vergleichsbeispiel 9 konnte somit unter Verwendung des erfindungsgemäßen Polycarbonatmasterbatchs eine Formmasse mit deutlich verbesserten Oberflächeneigenschaften hergestellt werden bei gleichbleibendem Durchsatz und nur unwesentlich höherem Energieeintrag.

### Vergleichsbeispiel 11

In Vergleichsbeispiel 11 wird die Formmassenzusammensetzung enthaltend 15 Gew.-% Titandioxid bei einem Durchsatz von 720 kg/h, einer Schneckenwellendrehzahl von 250 1/min und einem resultierenden spezifischen mechanischen Energieeintrag von 0,128 kWh/kg compoundiert. Die Temperatur der aus der Düsenplatte austretenden Schmelze beträgt 287 °C.

Die Oberflächen dreier aus der compoundierten Formmasse spritzgegossenen Platten weisen im Mittel 948,9 Defekte pro cm², einen mittleren Defektdurchmesser von 30,8 µm und einen maximalen Defektdurchmesser von 171,4 µm auf.

### Beispiel 12 (erfindungsgemäß - Polycarbonatmasterbatch)

Im erfindungsgemäßen Beispiel 12 wird die Polycarbonatmasterbatch-Zusammensetzung enthaltend 40 Gew.-% Titandioxid bei einem Durchsatz von 120 kg/h, einer Drehzahl von 200 1/min und einem resultierenden spezifischen mechanischen Energieeintrag von 0,067 kWh/kg compoundiert. Die Temperatur der aus der Düsenplatte austretenden Schmelze beträgt 265 °C.

### Beispiel 12.1 (erfindungsgemäß - Polycarbonatformmasse)

Im erfindungsgemäßen Beispiel 12.1 wird die Formmassenzusammensetzung enthaltend 15,16 Gew.-% Titandioxid, eingebracht mittels des gemäß Beispiel 12 hergestellten Polycarbonatmasterbatchs, bei einem Durchsatz von 720 kg/h, einer Schneckenwellendrehzahl von 280 1/min und einem resultierenden spezifischen mechanischen Energieeintrag von 0,137 kWh/kg compoundiert. Die Temperatur der aus dem Extruder austretenden Schmelze beträgt 291 °C.

Die Oberflächen dreier aus der compoundierten Formmasse spritzgegossenen Platten weisen im Mittel 16,4 Defekte pro cm², einen mittleren Defektdurchmesser von 22,5 µm und einen maximalen Defektdurchmesser von 149,3 µm auf.

Im Vergleich zum Vergleichsbeispiel 11 konnte somit unter Verwendung des erfindungsgemäßen Polycarbonatmasterbatchs eine Formmasse mit deutlich verbesserten Oberflächeneigenschaften hergestellt werden bei gleichbleibendem Durchsatz und nur leicht höherem Energieeintrag.

### Vergleichsbeispiel 13 (Polycarbonatmasterbatch)

Im Vergleichsbeispiel 13 wird die Polycarbonatmasterbatch-Zusammensetzung enthaltend 40 Gew.-% Titandioxid bei einem Durchsatz von 200 kg/h, einer Drehzahl von 200 1/min und einem resultierenden spezifischen mechanischen Energieeintrag von 0,128 kWh/kg in einem Doppelschneckenextruder compoundiert. Die Temperatur der aus der Düsenplatte austretenden Schmelze beträgt 323 °C.

### Vergleichsbeispiel 14 (Polycarbonatformmasse)

Im Vergleichsbeispiel 14 wird die Formmassenzusammensetzung enthaltend 15,16 Gew.-% Titandioxid, eingebracht mittels des gemäß Beispiel 13 hergestellten Polycarbonatmasterbatchs, bei einem Durchsatz von 720 kg/h, einer Schneckenwellendrehzahl von 280 1/min und einem resultierenden spezifischen mechanischen Energieeintrag von 0,136 kWh/kg compoundiert. Die Temperatur der aus dem Extruder austretenden Schmelze beträgt 293 °C.

Die Oberflächen dreier aus der compoundierten Formmasse spritzgegossenen Platten weisen im Mittel 103 Defekte pro cm², einen mittleren Defektdurchmesser von 25,7 µm und einen maximalen Defektdurchmesser von 158,5 µm auf.

Im Vergleich zum Vergleichsbeispiel 11 konnte somit unter Verwendung eines auf einem herkömmlichen Doppelschneckenextruder hergestellten Polycarbonatmasterbatchs eine Formmasse mit deutlich verbesserten Oberflächeneigenschaften hergestellt werden bei gleichbleibendem Durchsatz und nur leicht höherem Energieeintrag. Allerdings zeigt der Vergleich des Vergleichsbeispiels 14 mit dem erfindungsgemäßen Beispiel 12.1, dass unter Verwendung eines auf einem kontinuierlichen Einwellenkneter hergestellten Polycarbonatmasterbatchs eine Formmasse mit nochmals deutlich verbesserten Oberflächeneigenschaften hergestellt werden konnte als mit einem Polycarbonatmasterbatch, der auf einem herkömmlichen Doppelschneckenextruder hergestellt wurde.

Die Prozessparameter und Formmasseneigenschaften der Vergleichs- und erfindungsgemäßen Versuche 1-14 sind in der Tabelle 1 zusammengefasst.

**Tabelle 1**

| Nr | | Gehalt Verstärkungsfül 1-stoff | Durchsatz | Drehzahl | Spezifischer mechanischer Energieeintrag | Schmelze-temperatur | Schlagzähigkeit nach DIN EN ISO 180 / 1U | | | Kerbschlagz ähigkeit nach DIN EN ISO 180 / 1A | E-Modul nach DIN EN ISO 527 | Oberflächendefekte | | |
|---|---|---|---|---|---|---|---|---|---|---|---|---|---|---|
| | | | | | | | bei 23 °C | bei -20 °C | bei -30°C | bei 23 °C | bei 23 °C | Arithmetischer Mittelwert aus Messung an 3 Platten | | |
| | | Gew.-% | kg/h | l/min | kWh/kg | °C | kJ/m² | kJ/m² | kJ/m² | kJ/m² | MPa | Defekte/cm² | Mittlerer Defektdurchmesser [µm] | Maximaler Defektdurchmesser [µm] |
| 1 | Vergleich | 3 | 2100 | 600 | 0,174 | 354 | | | | | | 88 | 20,1 | 104,8 |
| 2.1.1 | erfindungsgemäß | 3 | 3000 | 500 | 0,142 | 327 | | | | | | 79 | 20,1 | 66,5 |
| 3 | Vergleich | 15 | 690 | 260 | 0,.131 | 326 | | | | | | 2948 | 40,8 | 206,2 |
| 4.1.1 | erfindungsgemäß | 15 | 690 | 260 | 0.139 | 329 | | | | | | 78 | 16,2 | 125 |
| 4.2.1 | erfindungsgemäß | 15 | 690 | 275 | 0,138 | 332 | | | | | | 78 | 16,2 | 125 |
| 5 | Vergleich | 6,75 | 720 | 270 | 0,132 | 297 | | | | 15 | | 128 | 32,3 | 176,3 |
| 6.1 | erfindungsgemäß | 6,75 | 720 | 270 | 0,136 | 299 | | | | 37,6 | | 67 | 20,5 | 116,3 |
| 7 | Vergleich | 15 | 600 | 475 | 0,145 | 319 | 74 | 75 | 68 | | 4243 | | | |
| 81 | erfindungsgemäß | 15 | 600 | 275 | 0,127 | 290 | 79 | 80 | 78 | | 4394 | | | |
| 9 | Vergleich | 3,33 | 690 | 240 | 0,123 | 285 | | | | | | 49,1 | 22,9 | 216,9 |
| 10.1 | erfindungsgemäß | 3,36 | 690 | 250 | 0,126 | 287 | | | | | | 19,1 | 22,4 | 75,6 |
| 11 | Vergleich | 15 | 720 | 250 | 0,128 | 287 | | | | | | 948,9 | 30,8 | 171,4 |
| 12.1 | erfindungsgemäß | 15,16 | 720 | 280 | 0,137 | 291 | | | | | | 16,4 | 22,5 | 149,3 |
| 14 | Vergleich | 15,16 | 720 | 280 | 0,136 | 293 | | | | | | 103 | 25,7 | 158,5 |

## Patentansprüche

1. Verfahren zur Herstellung eines Masterbatches, enthaltend folgende Bestandteile:
70 bis 25 Gew.-% Polycarbonat,
30 bis 70 Gew.-% Verstärkungsfüllstoff,
0 bis 5 Gew.-% sonstige Masterbatch-Bestandteile,
wobei die Summe der Bestandteile 100 Gew.-% beträgt, und wobei das Masterbatch in einem kontinuierlichen Einwellenkneter compoundiert wird,
wobei
der Verstärkungsfüllstoff ausgewählt ist aus ein oder mehreren Mitgliedern der Gruppe umfassend die Mitglieder Titandioxid (TiO₂), Talkum (Mg₃Si₄O₁₀(OH)₂), Dolomit CaMg[CO₃]₂, Kaolinit Al₄[(OH)₈|Si₄O₁₀] und Wollastonit Ca₃[Si₃O₉], bevorzugt ausgewählt aus ein oder mehreren Mitgliedern der Gruppe umfassend die Mitglieder Titandioxid (TiO₂) und Talkum (Mg₃Si₄O₁₀(OH)₂),
und wobei
der Anteil an Polyester im Masterbatch maximal 0,9 Gew.-% beträgt.

2. Verfahren nach Anspruch 1, wobei das Masterbatch 35 bis 65 Gew.-%, bevorzugt 40 bis 60 Gew.-% Verstärkungsfüllstoff und 65 bis 31 Gew.-%, bevorzugt 59,5 bis 37 Gew.-%Polycarbonat enthält, wobei die Summe der Bestandteile 100 Gew.-% beträgt.

3. Verfahren nach Anspruch 1 oder 2, wobei das Masterbatch 0 bis 5 Gew.-%, bevorzugt 0 bis 4 Gew.-%, besonders bevorzugt 0 bis 3 Gew.-% sonstige Masterbatch-Bestandteile enthält, wobei die Summe der Bestandteile 100 Gew.-% beträgt.

4. Verfahren nach einem der Ansprüche 1 bis 3, wobei der Verstärkungsfüllstoff ausgewählt ist aus der Gruppe umfassend Titandioxid (TiO₂), Talkum (Mg₃Si₄O₁₀(OH)₂), Dolomit CaMg[CO₃]₂, Kaolinit Al₄[(OH)₈|Si₄O₁₀] und Wollastonit Ca₃[Si₃O₉], bevorzugt ausgewählt aus der Gruppe umfassend Titandioxid (TiO₂) und Talkum (Mg₃Si₄O₁₀(OH)₂).

5. Verfahren nach einem der Ansprüche 1 bis 4, wobei das Verfahren folgende Schritte aufweist:
(1) Zugeben von Polycarbonat und von mindestens einem Verstärkungsfüllstoff in einen kontinuierlichen Einwellenkneter;
(2) Compoundieren des Polycarbonats und des mindestens einen Verstärkungsfüllstoffs mit dem kontinuierlichen Einwellenkneter.

6. Verfahren nach einem der Ansprüche 1 bis 5, wobei die Zugabe des Verstärkungsfüllstoffs entweder vor dem Aufschmelzen des Polycarbonats oder nach dem Aufschmelzen des Polycarbonats oder sowohl vor als auch nach dem Aufschmelzen des Polycarbonats erfolgt.

7. Masterbatch, erhältlich nach einem der Ansprüche 1 bis 6.

8. Verfahren zur Herstellung einer Formmasse, enthaltend folgende Bestandteile:
99,5 bis 22,5 Gew.-% Polycarbonat,
0,5 bis 60 Gew.-% Verstärkungsfüllstoff,
0 bis 61 Gew.-% sonstige Formmassen-Bestandteile,
wobei die Summe der Bestandteile 100 Gew.-% beträgt, und wobei das Verfahren folgende Schritte aufweist:
(3) Zugeben des Masterbatches nach Anspruch 7 und von Polycarbonat in ein Compoundieraggregat;
(4) Compoundieren des Masterbatches nach Anspruch 7 und des Polycarbonats mit einem Compoundieraggregat,
wobei
der Verstärkungsfüllstoff ausgewählt ist aus ein oder mehreren Mitgliedern der Gruppe umfassend die Mitglieder Titandioxid (TiO₂), Talkum (Mg₃Si₄O₁₀(OH)₂), Dolomit CaMg[CO₃]₂, Kaolinit Al₄[(OH)₈|Si₄O₁₀] und Wollastonit Ca₃[Si₃O₉], bevorzugt ausgewählt aus ein oder mehreren Mitgliedern der Gruppe umfassend die Mitglieder Titandioxid (TiO₂) und Talkum (Mg₃Si₄O₁₀(OH)₂),
und wobei
entweder der Anteil an Polyester in der Formmasse maximal 0,9 Gew.-% beträgt oder
der Anteil an Polyester in der Formmasse mindestens 22 Gew.-% und maximal 58 Gew.-% beträgt.

9. Verfahren nach Anspruch 8, wobei die Formmasse 1,5 bis 50 Gew.-%, bevorzugt 3 bis 40 Gew.-% Verstärkungsfüllstoff und 98,5 bis 25 Gew.-%, besonders bevorzugt 97 bis 35 Gew.-% Polycarbonat enthält, wobei die Summe der Bestandteile 100 Gew.-% beträgt.

10. Verfahren nach Anspruch 9, wobei die Formmasse 0 bis 55 Gew.-%, bevorzugt 0 bis 25 Gew.-% sonstige Formmassen-Bestandteile enthält, wobei die Summe der Bestandteile 100 Gew.-% beträgt.

11. Verfahren nach einem der Ansprüche 8 bis 10, wobei der Verstärkungsfüllstoff ausgewählt ist aus der Gruppe umfassend Titandioxid (TiO₂), Talkum (Mg₃Si₄O₁₀(OH)₂), Dolomit CaMg[CO₃]₂, Kaolinit Al₄[(OH)₈|Si₄O₁₀] und Wollastonit Ca₃[Si₃O₉], bevorzugt ausgewählt aus der Gruppe umfassend Titandioxid (TiO₂) und Talkum (Mg₃Si₄O₁₀(OH)₂).

12. Formmasse, hergestellt nach einem Verfahren nach einem der Ansprüche 8 bis 11.

13. Formmasse nach Anspruch 12, **dadurch gekennzeichnet, dass** sie nach Abkühlung ohne weitere Verarbeitung zum Spritzguss verwendbar ist.

14. Verwendung einer Formmasse nach Anspruch 12 oder 13 zur Herstellung eines Formkörpers, insbesondere eines durch Spritzguss erhältlichen Gegenstands oder einer durch Extrusion der Formmasse erhältlichen Folie oder Platte, oder eines Reflektors für eine Leuchte oder eines Strukturbauteils.

## Claims

1. Process for producing a masterbatch comprising the following constituents:
70% to 25% by weight of polycarbonate,
30% to 70% by weight of reinforcing filler,
0% to 5% by weight of other masterbatch constituents,
the sum of the constituents being 100% by weight, and wherein the masterbatch is compounded in a continuous single-shaft kneader,
wherein
the reinforcing filler is selected from one or more members of the group made up of titanium dioxide (TiO₂), talc (Mg₃Si₄O₁₀(OH)₂), dolomite CaMg[CO₃]₂, kaolinite Al₄[(OH)₈|Si₄O₁₀], and wollastonite Ca₃[Si₃O₉], preferably selected from one or more members of the group made up of titanium dioxide (TiO₂) and talc (Mg₃Si₄O₁₀(OH)₂),
and wherein
the proportion of polyester in the masterbatch is not more than 0.9% by weight.

2. Process according to Claim 1, wherein the masterbatch comprises 35% to 65% by weight, preferably 40% to 60% by weight, of reinforcing filler and 65% to 31% by weight, preferably 59.5% to 37% by weight, of polycarbonate, the sum of the constituents being 100% by weight.

3. Process according to Claim 1 or 2, wherein the masterbatch comprises 0% to 5% by weight, preferably 0% to 4% by weight, more preferably 0% to 3% by weight, of other masterbatch constituents, the sum of the constituents being 100% by weight.

4. Process according to any of Claims 1 to 3, wherein the reinforcing filler is selected from the group comprising titanium dioxide (TiO₂), talc (Mg₃Si₄O₁₀(OH)₂), dolomite CaMg[CO₃]₂, kaolinite Al₄[(OH)₈|Si₄O₁₀], and wollastonite Ca₃[Si₃O₉], preferably selected from the group comprising titanium dioxide (TiO₂) and talc (Mg₃Si₄O₁₀(OH)₂).

5. Process according to any of Claims 1 to 4, wherein the process comprises the following steps:
(1) adding polycarbonate and at least one reinforcing filler to a continuous single-shaft kneader;
(2) compounding the polycarbonate and the at least one reinforcing filler using the continuous single-shaft kneader.

6. Process according to any of Claims 1 to 5, wherein the reinforcing filler is added either before the polycarbonate has melted or after the polycarbonate has melted or both before and after the polycarbonate has melted.

7. Masterbatch obtainable according to any of Claims 1 to 6.

8. Process for producing a molding compound comprising the following constituents:
99.5% to 22.5% by weight of polycarbonate,
0.5% to 60% by weight of reinforcing filler,
0% to 61% by weight of other molding compound constituents,
the sum of the constituents being 100% by weight, and wherein the process comprises the following steps:
(3) adding the masterbatch according to Claim 7 and polycarbonate to a compounding unit;
(4) compounding the masterbatch according to Claim 7 and the polycarbonate using a compounding unit,
wherein
the reinforcing filler is selected from one or more members of the group made up of titanium dioxide (TiO₂), talc (Mg₃Si₄O₁₀(OH₂), dolomite CaMg[CO₃]₂, kaolinite Al₄[(OH₈|Si₄O₁₀], and wollastonite Ca₃[Si₃O₉], preferably selected from one or more members of the group made up of titanium dioxide (TiO₂) and talc (Mg₃Si₄O₁₀(OH₂),
and wherein
either the proportion of polyester in the molding compound is not more than 0.9% by weight
or
the proportion of polyester in the molding compound is not less than 22% by weight and not more than 58% by weight.

9. Process according to Claim 8, wherein the molding compound comprises 1.5% to 50% by weight, preferably 3% to 40% by weight, of reinforcing filler and 98.5% to 25% by weight, more preferably 97% to 35% by weight, of polycarbonate, the sum of the constituents being 100% by weight.

10. Process according to Claim 9, wherein the molding compound comprises 0% to 55% by weight, preferably 0% to 25% by weight, of other molding compound constituents, the sum of the constituents being 100% by weight.

11. Process according to any of Claims 8 to 10, wherein the reinforcing filler is selected from the group comprising titanium dioxide (TiO₂), talc (Mg₃Si₄O₁₀(OH₂), dolomite CaMg[CO₃]₂, kaolinite (Al₄[(OH₈|Si₄O₁₀], and wollastonite Ca₃[Si₃O₉], preferably selected from the group comprising titanium dioxide (TiO₂) and talc (Mg₃Si₄O₁₀(OH₂).

12. Molding compound produced by a process according to any of Claims 8 to 11.

13. Molding compound according to Claim 12, **characterized in that**, after cooling, it can be used for injection molding without further processing.

14. Use of a molding compound according to Claim 12 or 13 for production of a molded article, in particular of an article obtainable by injection molding or of a films or sheet obtainable by extrusion of the molding compound, or of a reflector for a light or of a structural component.

## Revendications

1. Procédé pour la préparation d'un lot maître, contenant les constituants suivants :
- 70 à 25% en poids de polycarbonate,
- 30 à 70% en poids de charge de renforcement,
- 0 à 5% en poids d'autres constituants de lot maître, la somme des constituants valant 100% en poids et le lot maître étant mélangé dans un malaxeur continu à un arbre, la charge de renforcement étant choisie parmi un ou plusieurs membres du groupe comprenant les membres dioxyde de titane (TiO₂), talc (Mg₃Si₄O₁₀(OH)₂), dolomite CaMg[CO₃]₂, kaolinite Al₄[(OH₈|Si₄O₁₀] et wollastonite Ca₃[Si₃O₉], de préférence choisie parmi un ou plusieurs membres du groupe comprenant les membres dioxyde de titane (TiO₂) et talc (Mg₃Si₄O₁₀(OH)₂), et
la proportion de polyester dans le lot maître est d'au maximum 0,9% en poids.

2. Procédé selon la revendication 1, le lot maître contenant 35 à 65% en poids, de préférence 40 à 60% en poids de charge de renforcement et 65 à 31% en poids, de préférence 59,5 à 37% en poids de polycarbonate, la somme des constituants valant 100% en poids.

3. Procédé selon la revendication 1 ou 2, le lot maître contenant 0 à 5% en poids, de préférence 0 à 4% en poids, de manière particulièrement préférée 0 à 3% en poids d'autres constituants de lot maître, la somme des constituants valant 100% en poids.

4. Procédé selon l'une quelconque des revendications 1 à 3, la charge de renforcement étant choisie dans le groupe comprenant le dioxyde de titane (TiO₂), le talc (Mg₃Si₄O₁₀(OH)₂), la dolomite CaMg[CO₃]₂, la kaolinite Al₄[(OH)₈|Si₄O₁₀] et la wollastonite Ca₃[Si₃O₉], de préférence choisie dans le groupe comprenant le dioxyde de titane (TiO₂) et le talc (Mg₃Si₄O₁₀(OH)₂).

5. Procédé selon l'une quelconque des revendications 1 à 4, le procédé comprenant les étapes suivantes :
(1) introduction de polycarbonate et d'au moins une charge de renforcement dans un malaxeur continu à un arbre ;
(2) mélange du polycarbonate et de ladite au moins une charge de renforcement à l'aide du malaxeur continu à un arbre.

6. Procédé selon l'une quelconque des revendications 1 à 5, l'introduction de la charge de renforcement ayant lieu soit avant la fusion du polycarbonate, soit après la fusion du polycarbonate, ou alors tant avant qu'après la fusion du polycarbonate.

7. Lot maître pouvant être obtenu selon l'une quelconque des revendications 1 à 6.

8. Procédé pour la préparation d'une masse de moulage, contenant les constituants suivants :
- 99,5 à 22,5% en poids de polycarbonate,
- 0,5 à 60% en poids de charge de renforcement,
- 0 à 61% en poids d'autres constituants de masse de moulage,
la somme des constituants valant 100% en poids et le procédé présentant les étapes suivantes :
(3) introduction du lot maître selon la revendication 7 et de polycarbonate dans un appareil de mélange ;
(4) mélange du lot maître selon la revendication 7 et du polycarbonate à l'aide d'un appareil de mélange, la charge de renforcement étant choisie parmi un ou plusieurs membres du groupe comprenant les membres dioxyde de titane (TiO₂), talc (Mg₃Si₄O₁₀(OH)₂), dolomite CaMg[CO₃]₂, kaolinite Al₄[(OH₈|Si₄O₁₀] et wollastonite Ca₃[Si₃O₉], de préférence choisie parmi un ou plusieurs membres du groupe comprenant les membres dioxyde de titane (TiO₂) et talc (Mg₃Si₄O₁₀(OH)₂), et
soit la proportion de polyester dans la masse de moulage représentant au maximum 0,9% en poids, soit la proportion de polyester dans la masse de moulage étant d'au moins 22% en poids et de maximum 58% en poids.

9. Procédé selon la revendication 8, la masse de moulage contenant 1,5 à 50% en poids, de préférence 3 à 40% en poids de charge de renforcement et 98,5 à 25% en poids, de manière particulièrement préférée 97 à 35% en poids de polycarbonate, la somme des constituants valant 100% en poids.

10. Procédé selon la revendication 9, la masse de moulage contenant 0 à 55% en poids, de préférence 0 à 25% en poids d'autres constituants de masse de moulage, la somme des constituants valant 100% en poids.

11. Procédé selon l'une quelconque des revendications 8 à 10, la charge de renforcement étant choisie dans le groupe comprenant le dioxyde de titane (TiO₂), le talc (Mg₃Si₄O₁₀(OH)₂), la dolomite CaMg[CO₃]₂, la kaolinite Al₄[(OH)₈ | Si₄O₁₀] et la wollastonite Ca₃[Si₃O₉], de préférence choisie dans le groupe comprenant le dioxyde de titane (TiO₂) et le talc (Mg₃Si₄O₁₀(OH)₂).

12. Masse de moulage préparée selon un procédé selon l'une quelconque des revendications 8 à 11.

13. Masse de moulage selon la revendication 12, **caractérisée en ce qu'**elle peut être utilisée après refroidissement, sans autre transformation, pour le moulage par injection.

14. Utilisation d'une masse de moulage selon la revendication 12 ou 13 pour la fabrication d'un corps moulé, en particulier d'un objet pouvant être obtenu par moulage par injection ou d'une feuille ou d'une plaque pouvant être obtenue par extrusion de la masse de moulage ou d'un réflecteur pour un luminaire ou d'un composant structural.
